# EUROPÄISCHE PATENTSCHRIFT

(11) **EP 1 477 439 B1**
(45) Veröffentlichungstag und Bekanntmachung des Hinweises auf die Patenterteilung: **20.12.2006**
(21) Anmeldenummer: 04011489.4
(22) Anmeldetag: 14.05.2004
(51) Int. Cl.: B65G 47/91

(54) **Vorrichtung zum Umsetzen von Gegenständen**
Device for transferring objects
Dispositif pour transférer des objets

(30) Priorität: 15.05.2003 DE 10321874
(43) Veröffentlichungstag der Anmeldung: 17.11.2004
(73) Patentinhaber: FESTO AG & Co, 73734 Esslingen (DE)
(72) Erfinder: Ihrig, Helmut, 64743 Beefelden (DE)
(74) Vertreter: Vetter, Hans

(56) Entgegenhaltungen:
- DE-C- 900 562
- US-A- 3 033 604

## Beschreibung

Die Erfindung betrifft eine Vorrichtung zum Umsetzen von Gegenständen, wie Werkstücken, Bauteilen oder dergleichen, mit wenigstens einer auf die Oberfläche des Gegenstandes aufsetzbaren, nach Art eines Saugnapfes wirkenden und mit Unterdruck beaufschlagbaren Saugeinrichtung, die mit zumindest einem Teil des Innenraums eines Druckzylinders in Verbindung steht, in welchem wenigstens ein gegen die Zylinderinnenseite abgedichteter Zylinderkolben derart verschiebbar angeordnet ist, dass der mit der saugeinrichtung korrespondierende, auf der der Saugeinrichtung zugewandten Seite des Zylinderkolbens angeordnete Zylinderraum vergrößerbar ist, um dort Unterdruck zu erzeugen.

Vorrichtungen zum Umsetzen von Gegenständen finden bei industriellen Herstellungs- und Bearbeitungsprozessen vierbreitet Verwendung. Sie sind mit einem oder mehreren, nach Art eines Saugnapfes wirkenden und mit Unterdruck beaufschlagbaren Saugeinrichtungen ausgestattet, welche auf einen im wesentlichen ebenen Oberflächenabschnitt der umzusetzenden Gegenstände fluiddicht aufgesetzt werden können. Durch Anlegen eines Unterdrucks an die Saugeinrichtung wird der Gegenstand an der Saugeinrichtung festgesaugt und kann von seinem ursprünglichen Standort an einen anderen umgesetzt werden. Zum Lösen der Gegenstände von der Saugeinrichtung wird letztere wieder mit Normaldruck beaufschlagt.

Nachteilig ist insbesondere der in vorrichtungstechnischer und folglich in finanzieller Hinsicht aufwendige Betrieb bekannter Vorrichtungen unter Einsatz teurer Vakuumpumpen, welche zusätzliche Komponenten, wie Verbindungsstücke mit Vakuumgewinden, Vakuumschläuchen, Vakuumventilen und dergleichen erfordern. Die eingesetzte Vakuumtechnik weist ferner während des Betriebs einen relativ hohen Energiebedarf auf.

Aus der DE 900 562 C ist ein Saugheber für Blechscheiben oder dergleichen gekannt, mit einem Saugzylinder in dem ein Saugkolben verschieblich geführt ist. Dabei wird der Saugkolben durch die Federkraft einer an der Kolbenstange des Saugkolbens angeordneten Rückstellfeder zum Saugstück hin gedrückt. Das Ansaugen eines aufzunehmenden Werkstücks erfolgt nun derart, dass ein zugeordneter Elektromagnet bestromt wird, so dass der Saugkolben gegen die Federkraft der Rückstellfeder nach oben schnellt, wobei ein Vakuum entsteht.

In der US 3,033,604 A ist eine Saugeinrichtung offenbart, bei der ein Kolben durch die Kraft einer Stellfeder nach oben gedrückt wird, also mithin weg von der als elastische saugglocke ausgebildeten Saugeinrichtung vorbelastet ist. Der Kolben wird dabei mechanisch mittels einer Nocke entgegen seiner Vorbelastungsrichtung nach unten gedrückt.

Der Erfindung liegt die Aufgabe zugrunde, eine Vorrichtung der eingangs genannten Art zu schaffen, die gegenüber herkömmlichen Saugeinrichtungen zuverlässiger arbeitet.

Erfindungsgemäß wird diese Aufgabe bei einer Vorrichtung der eingangs genannten Art dadurch gelöst, dass der Zylinderkolben in Richtung des der Saugeinrichtung abgewandten Endes des Druckzylinders vorbelastet und entgegen seiner Vorbelastungsrichtung mittels Fluiddruck verschiebbar ist.

Aufgrund der erfindungsgemäß vorgesehenen Vorbelastung des Zylinderkolbens in diejenige Richtung, in der er den mit der Saugeinrichtung korrespondierenden Zylinderraum vergrößert, geschieht der Aufbau des zum Ergreifen eines umzusetzenden Gegenstandes mittels der Saugeinrichtung nach im wesentlichen fluiddichtem Aufsetzen derselben auf die Oberfläche des Gegenstandes erforderlichen Unterdruckes rein mechanisch, so dass die Vorrichtung gänzlich ohne Vakuumpumpen oder andere Evakuierungseinrichtungen auskommt und folglich gegenüber herkömmlichen Umsetzvorrichtungen sowohl erheblich geringere Investitionskosten als auch deutlich niedrigere Betriebskosten erfordert. Die Senkung der Betriebskosten resultiert insbesondere aus einem äußerst geringen Energieverbrauch, da lediglich die Verschiebung des Zylinderkolbens entgegen seiner Vorbelastungsrichtung, also vor Ergreifen des umzusetzenden Gegenstandes mittels der Saugeinrichtung, Energie erfordert. Nach Verschieben des Zylinderkolbens entgegen seiner Vorbelastungsrichtung wird die Saugeinrichtung mit der Oberfläche des umzusetzenden Gegenstandes in Kontakt gebracht und der Zylinderkolben freigegeben, so dass dieser in Richtung seiner Vorspannung verschoben und die mit der Saugeinrichtung korrespondierende Zylinderkammer dadurch vergrößert wird, wobei sich der an der Saugeinrichtung anliegende Unterdruck einstellt. Mit "Zylinderkolben" im Sinne der Erfindung sind sowohl herkömmliche, in einem Zylinderrohr verschiebbare Kolben als auch Membranen sowie beliebige andere Mittel gemeint, welche bei einer axialen Verschiebung entlang der Längsachse des Zylinders zur Erzeugung von Unterdruck in der Lage sind.

Die Verschiebung des Zylinderkolbens in die bezüglich seiner Vorbelastung entgegengesetzte Richtung erfolgt mittels eines Druckfluides. Es ergibt sich für jeden Kolbenhub ein nur geringer Bedarf an Druckfluid, welcher dem Volumen des mit der Saugeinrichtung in Verbindung stehenden Zylinderraumes entspricht, der zur Erzeugung des an die Saugeinrichtung anzulegenden Unterdrucks nach Expansion des Druckfluides rein mechanisch expandiert wird.

Eine in konstruktionstechnischer Hinsicht vorteilhafte Ausgestaltung sieht vor, dass der mit der Saugeinrichtung korrespondierende Zylinderraum auf der der Saugeinrichtung zugewandten Seite des zylinderkolbens angeordnet und der Zylinderkolben in Richtung des der Saugeinrichtung abgewandten Endes des Druckzylinders vorbelastet ist. Bei einer derart ausgebildeten Vorrichtung ist der Zylinderkolben in Richtung der der Saugeinrichtung abgewandten Seite des Druckzylinders vorbelastet, um nach Verschieben des Zylinderkolbens entgegen seiner Vorbelastungsrichtung rein mechanisch den mit der Saugeinrichtung korrespondierenden Zylinderraum zu vergrößern und folglich an der auf einen umzusetzenden Gegenstand aufgesetzten Saugeinrichtung Unterdruck zu erzeugen.

Wie bereits angedeutet, wird der Zylinderkolben entgegen seiner Vorbelastungsrichtung mittels Fluiddruck, also pneumatisch, hydropneumatisch oder hydraulisch, verschiebbar ist. Der Zylinderkolben ist vorzugsweise pneumatisch verschiebbar, was insbesondere aus Kostengründen z.B. mittels Druckluft geschehen kann.

Es ist möglich, dass der Zylinderkolben entgegen seiner Vorbelastungsrichtung zusätzlich zur Verschiebbarkeit mittels Fluiddruck magnetisch verschiebbar ist. Dabei kann der Zylinderkolben und/oder eine mit diesem verbundene Kolbenstange einen Permanentmagneten tragen, welcher mit einem um den Umfang des Zylinders angeordneten Elektromagneten, insbesondere einer Spule, zusammenwirkt. Alternativ kann vorgesehen sein, dass der Zylinderkolben und/oder eine mit diesem verbundene Kolbenstange einen Elektromagneten, insbesondere eine Spule, trägt, welcher mit einem um den Umfang des Zylinders angeordneten Permanentmagneten zusammenwirkt. Auch im Falle eines solchen zusätzlichen elektromagnetischen Antriebs des Zylinderkolbens ergibt sich ein gegenüber herkömmlichen Umsetzvorrichtungen erheblich geringerer Energieverbrauch, da der entweder am Zylinderkolben oder am Umfang des Zylinders angeordnete Elektromagnet lediglich während der Bewegung des Zylinderkolbens entgegen seiner Vorspannungsrichtung mit Strom beaufschlagt wird, während der zum Ergreifen eines Gegenstandes mittels der Saugeinrichtung benötigte Unterdruck wiederum rein mechanisch durch die Vorspannung des Zylinderkolbens aufgebaut wird.

Der Zylinderkolben ist vorzugsweise elastisch vorbelastet, was auf besonders einfache und kostengünstige Weise insbesondere mittels wenigstens einer Schraubenfeder geschehen kann. Der Einsatz einer Schraubenfeder zur elastischen Vorbelastung des Zylinderkolbens sorgt ferner für einen im wesentlichen störungs- und verschleißfreien Betrieb der Umsetzvorrichtung und ermöglicht darüber hinaus eine Einstellung des an der Saugeinrichtung anliegenden, maximal möglichen Vakuums durch Einsatz von Schraubenfedern unterschiedlicher Federkonstante. Dabei ist das erzielbare Vakuum um so besser bzw. der erzielbare Unterdruck um so geringer, je größer die Federkonstante der Schraubenfeder gewählt wird und folglich je größer die durch die Federkraft auf den Zylinderkolben bewirkte Vorbelastung ist.

Um ein Eindringen von Verschmutzungen, wie Staubpartikel, Feuchtigkeit und dergleichen, in den Innenraum des Druckzylinders zu vermeiden, sieht eine vorteilhafte Ausgestaltung vor, dass zwischen der Saugeinrichtung und dem mit dieser korrespondierenden Innenraum des Druckzylinders ein Luftfilter, insbesondere ein Vakuumfilter, angeordnet ist.

Eine bevorzugte Ausführung sieht vor, dass die Saugeinrichtung stationär an dem Druckzylinder, insbesondere an einem Zylinderdeckel, angeordnet ist. Der Zylinderdeckel weist in diesem Fall eine die Saugeinrichtung mit dem dieser zugewandten Innenraum des Druckzylinders verbindende Durchgangsbohrung auf, an deren dem Druckzylinder abgewandten Ende die Saugeinrichtung fluiddicht, gegebenenfalls unter Zwischenschaltung eines Luftfilters, befestigt ist.

Bei einer solchen Umsetzvorrichtung ist der Zylinderkolben bevorzugt mittels einer an diesem festgelegten Kolbenstange geführt, wobei die Kolbenstange vorzugsweise einen an dem der Saugeinrichtung abgewandten Ende des Druckzylinders angeordneten Zylinderboden durchsetzt und an diesem im wesentlichen fluiddicht gelagert ist. Zur Erzeugung einer elastischen Vorbelastung des Zylinderkolbens mittels Schraubenfedern ist in vorteilhafter Ausgestaltung vorgesehen, dass die Kolbenstange an ihrem dem Zylinderkolben abgewandten Ende einen Bund aufweist, wobei die den Zylinderkolben vorbelastende Schraubenfeder zwischen dem Zylinderboden und dem Bund wirkt. Der Bund kann insbesondere in Längsrichtung der Kolbenstange verlagerbar an der Kolbenstange festgelegt sein, um die Vorspannung der Schraubenfeder und somit die elastische Vorbelastung des Zylinderkolbens einstellen zu können.

Im Falle eines zusätzliche elektromagnetischen Antriebs des Zylinderkolbens ist der Bund mit Vorteil in Form eines Permanent- oder Elektromagneten gebildet oder mit einem solchen ausgestattet und wirkt, wie bereits erwähnt, mit einem um den Umfang des Zylinderkolbens angeordneten E-lektro- oder Permanentmagneten zusammen.

Im Falle eines fluidischen Antriebs des Zylinderkolbens ist in bevorzugter Ausführung vorgesehen, dass der zwischen dem Zylinderkolben und dem Zylinderboden angeordnete Zylinderraum einen Fluidanschluß aufweist, um den Zylinderkolben entgegen seiner Vorbelastung mittels der Schraubenfeder durch ein in diesen Zylinderraum eingebrachtes Druckfluid zu verlagern. Der Fluidanschluß ist zweckmäßig mit einem Stellglied, insbesondere einem Steuerventil, ausgestattet über welches der diesem Fluidanschluß zugeordnete Zylinderraum mit einer Druckfluidquelle verbindbar ist.

Ferner kann der zwischen dem Zylinderkolben und der Saugeinrichtung angeordnete, mit dieser korrespondierende Zylinderraum einen Fluidanschluß aufweisen, welcher ebenfalls mit einem Stellglied, insbesondere einem Steuerventil, ausgestattet sein kann, um beispielsweise das an der Saugeinrichtung anliegende, mittels der Schraubenfeder rein mechanisch erzeugte Vakuum zu überwachen bzw. nachzuregeln.

Eine bezüglich der vorstehend erläuterten stationär an dem Druckzylinder angeordneten Saugeinrichtung alternative Ausgestaltung der erfindungsgemäßen Umsetzvorrichtung sieht in bevorzugter Ausführung vor, dass die Saugeinrichtung an der den Zylinderdeckel durchsetzenden und am Zylinderdeckel im wesentlichen fluiddicht gelagerten Kolbenstange teleskopierbar angeordnet ist. Eine solche Ausgestaltung weist insbesondere den Vorteil auf, dass der Druckzylinder bezüglich der umzusetzenden Gegenstände auf etwa gleichem Höhenniveau gehalten werden kann, wobei die Kolbenstange mit der Saugeinrichtung zum Ergreifen eines Gegenstandes aus dem Druckzylinder herausgefahren werden kann.

Bei einer derart ausgebildeten Vorrichtung ist es in konstruktionstechnischer Hinsicht günstig, wenn die Saugeinrichtung über eine in der Kolbenstange vorgesehene Durchgangsbohrung, gegebenenfalls unter Zwischenschaltung eines Filters, mit dem Zylinderraum auf der der Saugeinrichtung zugewandten Seite des Zylinderkolbens korrespondiert. Dabei ist die Durchgangsbohrung bevorzugt in Längserstreckungsrichtung der Kolbenstange und aus Symmetriegründen insbesondere zentral in derselben angeordnet.

In vorteilhafter Ausgestaltung ist die teleskopierbare Kolbenstange an ihrem der Saugeinrichtung abgewandten Ende an einem Führungselement gelagert, welches an seiner der Kolbenstange bzw. der Saugeinrichtung abgewandten Seite mit dem Zylinderkolben in Verbindung steht und in Richtung von diesem weg vorbelastet ist. Die Vorbelastung des Zylinderkolbens geschieht aus den genannten Gründen wiederum bevorzugt auf elastische Weise mittels einer Schraubenfeder, welche zwischen dem Führungselement und dem Zylinderkolben wirkt. Auf diese Weise ist der zur rein mechanischen Erzeugung des an die Saugeinrichtung anzulegenden Unterdruckes dienende Zylinderkolben über die Schraubenfeder mit dem Führungselement verbunden und von diesem weg elastisch vorbelastet.

Während auch bei einer solchermaßen ausgestatteten Umsetzvorrichtung mit teleskopierbarer Saugeinrichtung grundsätzlich ein zusätzlicher magnetischer Antrieb des Zylinderkolbens über an diesem festgelegte Blektro- bzw. Permanentmagneten vorgesehen sein kann, ist im Falle eines rein fluidischen Antriebs vorgesehen, dass der auf der der Saugeinrichtung abgewandten Seite des Zylinderkolbens angeordnete Zylinderraum einen Fluidanschluß aufweist, welcher zweckmäßig mit einem Stellglied, insbesondere mit einem Steuerventil, ausgestattet ist, um den Zylinderkolben entgegen seiner durch die Schraubenfeder erzeugten Vorbelastung in Richtung der Saugeinrichtung bzw. dem Führungselement zu verlagern.

Ferner weist der auf der der Saugeinrichtung zugewandten Seite des Zylinderkolbens angeordnete Zylinderraum zweckmäßig einen weiteren Fluidanschluß auf, welcher ebenfalls bevorzugt mit einem Stellglied, insbesondere mit einem Steuerventil, ausgestattet ist, um diesen Zylinderraum beim Ausfahren der Kolbenstange aus dem Druckzylinder infolge Anlegen eines Fluiddrucks auf der der saugeinrichtung abgewandten Seite des Zylinderkolbens zu entlüften und zum Ergreifen eines Gegenstandes wieder zu verschließen und somit den Aufbau eines Unterdruckes in dem mit der Saugeinrichtung korrespondierende Zylinderraum zu gewährleisten. Zur Vermeidung von Druckstößen können die Fluidanschlüsse ferner mit einer Drosselstrecke, insbesondere einem Drosselrückschlagventil, ausgestattet sein.

Vorzugsweise ist sowohl der auf der der Saugeinrichtung abgewandten Seite des Zylinderkolbens als auch der auf der der Saugeinrichtung zugewandten Seite des Zylinderkolbens angeordnete Zylinderraum mit je einem mit einem Stellglied, insbesondere einem Steuerventil, ausgestatteten Fluidanschluß ausgestattet und sind die beiden Fluidanschlüsse über ein Stellglied, insbesondere ein weiteres Steuerventil, gemeinsam ansteuerbar, wobei die Umsetzvorrichtung beispielsweise über das weitere Steuerventil an einer Druckfluidquelle anschließbar ist.

In Weiterbildung ist vorgesehen, dass das Führungselement in Richtung seiner in den Druckzylinder eingeschobenen Stellung vorbelastet ist, wobei auch das Führungselement vorzugsweise elastisch, insbesondere mittels einer zwischen diesem und dem Zylinderdeckel wirkenden Schraubenfeder, vorbelastet sein kann. Auf diese Weise ist die Kolbenstange stets in Richtung ihrer in den Zylinderkolben eingezogenen Richtung mechanisch vorbelastet, wobei die Federkonstante der das Führungselement vorbelastenden Schraubenfeder vorzugsweise geringer ist als die Federkonstante der den Zylinderkolben vorbelastenden Schraubenfeder, um bei Druckbeaufschlagung des Zylinderkolbens an seiner der Saugeinrichtung abgewandten Seite zum Zwecke des Herausfahrens der die Saugeinrichtung tragenden Kolbenstange aus dem Druckzylinder diese unter Kompression der das Führungselement vorbelastenden Schraubenfeder zunächst in ihre aus dem Zylinderkolben ausgezogene Position zu bringen und anschließend den Zylinderkolben bezüglich des Führungselementes unter Kompression der diesen vorbelastenden Schraubenfeder zum anschließenden Erzeugen eines an der Saugeinrichtung anliegenden Unterdruckes zu verschieben.

Eine solche Ausgestaltung bietet sich insbesondere dann an, wenn das Führungselement fluiddurchlässig ausgebildet ist, so dass die elastische Vorbelastung des Führungselementes den Aufbau eines Unterdruckes an der Saugeinrichtung mittels der elastischen Vorbelastung des Zylinderkolbens unterstützt, sobald der auf den Zylinderkolben entgegen seiner Vorbelastungsrichtung wirkende Fluiddruck nicht mehr auf den Zylinderkolben wirkt.

In alternativer Ausgestaltung ist vorgesehen, dass das Führungselement im wesentlichen fluiddicht gegen die Innenseite des Druckzylinders abgedichtet und der auf der der Saugeinrichtung zugewandten Seite des Zylinderkolbens angeordnete Fluidanschluß auf der dem Zylinderkolben abgewandten Seite des Führungselementes angeordnet ist. In diesem Fall dient ausschließlich der zwischen dem Führungselement und dem Zylinderkolben vorhandene Zylinderraum, welcher mit der Saugeinrichtung über die Durchgangsbohrung der Kolbenstange korrespondiert, zum Aufbau des an die Saugeinrichtung anlegbaren Unterdrucks, während der zwischen dem Führungselement und dem der Saugeinrichtung zugewandten Zylinderdeckel angeordneten Zylinderraum über den Fluidanschluß mit einem Druckfluid beaufschlagbar ist, um die Kolbenstange mit dem Führungselement unter Aufrechterhaltung des Unterdruckes in dem zwischen letzterem und dem Zylinderkolben angeordneten Zylinderraum aus dem ausgezogenen Zustand der Kolbenstange in ihren in den Druckzylinder eingezogenen Zustand zu überführen.

Ferner kann in vorteilhafter Ausgestaltung vorgesehen sein, dass der Zylinderkolben einen Magneten trägt, welcher mit stationär an dem Druckzylinder angeordneten Magnetsensoren zur Ermittlung der Position des Zylinderkolbens und/oder Magnetschaltern zur automatischen Steuerung der Stellglieder zusammenwirkt. Die insbesondere in Form von Steuerventilen ausgestalteten Stellglieder sind somit in Abhängigkeit von den während eines Umsetzvorgangs auftretenden Positionen des Zylinderkolbens des Druckzylinders automatisch steuerbar, so dass die mit den Stellgliedern korrespondierenden Zylinderräume automatisch mit einem Druckfluid beaufschlagbar oder expandierbar sind.

Weitere Merkmale und Vorteile der Erfindung ergeben sich aus der nachfolgenden Beschreibung von Ausführungsbeispielen der erfindungsgemäßen Umsetzvorrichtung unter Bezugnahme auf die Zeichnungen. Dabei zeigen:
- Fig. 1: einen Längsschnitt durch eine Ausführungsform einer Umsetzvorrichtung mit stationär am Druckzylinder angeordneter Saugeinrichtung in der Ruheposition;
- Fig. 2: die Vorrichtung gemäß Fig. 1 in der Position zum Ergreifen bzw. Freigeben eines Gegenstandes;
- Fig. 3: die Vorrichtung gemäß Fig. 1 und 2 in der Ansaugposition, in welcher sie den Gegenstand ergriffen hat;
- Fig. 4: einen Längsschnitt durch eine andere Ausführungsform einer Umsetzvorrichtung mit an einer Kolbenstange des Druckzylinders teleskopierbar angeordneter Saugeinrichtung in der Ruheposition;
- Fig. 5: die Vorrichtung gemäß Fig. 4 in der aus dem Druckzylinder ausgezogenen Position der Kolbenstange vor Verlagerung des Zylinderkolbens zum Erzeugen eines Unterdrucks;
- Fig. 6: die Vorrichtung gemäß Fig. 4 und 5 in der Position zum Ergreifen eines Gegenstandes;
- Fig. 7: die Vorrichtung gemäß Fig. 4 bis 6 in der Ansaugposition, in welcher sie den Gegenstand ergriffen hat, bei ausgezogener Kolbenstange;
- Fig. 8: die Vorrichtung gemäß Fig. 4 bis 7 in der Ansaugposition mit teilweise in den Zylinderkolben eingeschobener Kolbenstange;
- Fig. 9: die Vorrichtung gemäß Fig. 4 bis 8 in der Position zum Freigeben des Gegenstandes;
- Fig. 10: einen Längsschnitt durch eine bezüglich der Ausführungsform gemäß Fig. 4 bis 9 alternative Ausführungsform einer Umsetzvorrichtung in der Ruheposition;
- Fig. 11: die Vorrichtung gemäß Fig. 10 zu Beginn des Ausziehens der Kolbenstange aus dem Zylinderkolben;
- Fig. 12: die Vorrichtung gemäß Fig. 10 und 11 in der Position zum Ergreifen eines Gegenstandes;
- Fig. 13: die Vorrichtung gemäß Fig. 10 bis 12 in der Ansaugposition, in welcher sie den Gegenstand ergriffen hat, bei ausgezogener Position der Kolbenstange;
- Fig. 14: die Vorrichtung gemäß Fig. 10 bis 13 in der Ansaugposition bei in den Druckzylinder eingeschobener Position der Kolbenstange;
- Fig. 15: die Vorrichtung gemäß Fig. 10 bis 14 unmittelbar vor Freigeben des Gegenstandes; und
- Fig. 16: die Vorrichtung gemäß Fig. 10 bis 15 in der Position zum Freigeben des Gegenstandes nach teilweisem Einschieben der Kolbenstange in den Druckzylinder.

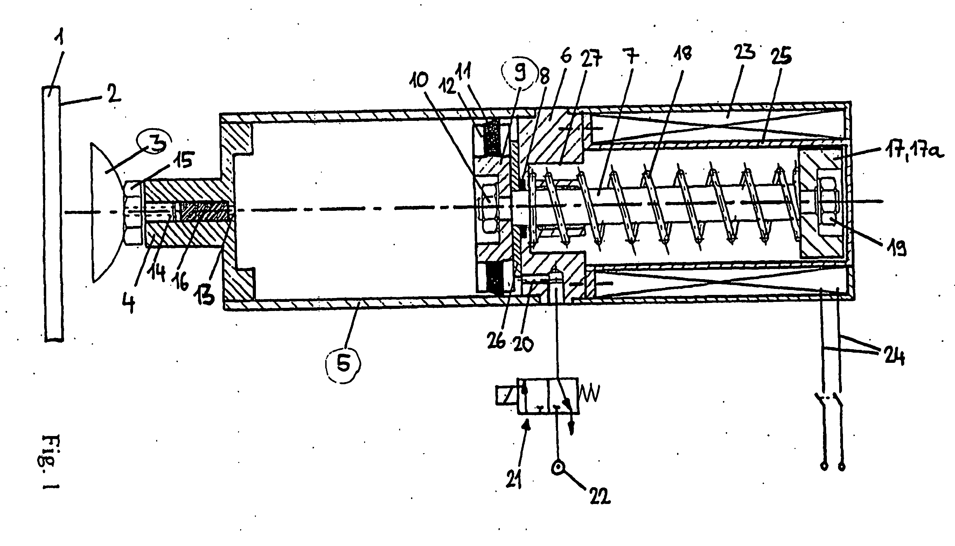

In Fig. 1 ist eine Vorrichtung zum Umsetzen von Gegenständen 1, wie Werkstücken, Bauteilen oder dergleichen, wiedergegeben, welche mit einer auf die Oberfläche 2 des Gegenstandes 1 aufsetzbaren, nach Art eines Saugnapfes wirkenden und mit Unterdruck beaufschlagbaren Saugeinrichtung 3 ausgestattet ist. Die Saugeinrichtung 3 ist im wesentlichen fluiddicht auf die Oberfläche 2 des Gegenstandes 1 aufsetzbar und beispielsweise aus einem nachgiebigen Material, wie einem elastomeren Kunststoff oder dergleichen, oder auch aus einem starren Material, wie Metall, Kunststoff etc., ausgebildet und weist insbesondere im letztgenannten Fall an ihrer dem Gegenstand 1 zugewandten Seite eine Umfangsdichtung auf (nicht dargestellt), mit welcher sie mit der Oberfläche 2 des Gegenstandes 1 in Kontakt treten kann.

Die Saugeinrichtung 3 ist an einem Zylinderdeckel 4 eines von diesem endseitig fluiddicht verschlossenen Druckzylinders 5 festgelegt. An seinem dem Zylinderdeckel 4 entgegengesetzten Ende ist der Druckzylinder 5 von einem Zylinderboden 6 im wesentlichen fluiddicht verschlossen. An dem Zylinderboden 6 ist eine Kolbenstange 7 gelagert, welche den Zylinderboden 6 durchsetzt und über einen Dichtring 8 gegen den Zylinderboden 6 abgedichtet ist. An ihrem in den Druckzylinder 5 hineinragenden Ende der Kolbenstange 7 ist ein Zylinderkolben 9, beispielsweise mittels einer Schraube 10, lösbar festgelegt. Der Zylinderkolben 9 ist mittels einer umfangsseitig angeordneten Dichtmanschette 11 im wesentlichen fluiddicht gegen die Innenwand des Druckzylinders 5 abgedichtet, wobei die Dichtmanschette 11 derart in eine Umfangsnut 12 des Zylinderkolbens 9 eingelegt ist, dass ihre Dichtlippe in Richtung des der Saugeinrichtung 3 abgewandten Endes des Zylinderraumes zeigt. Auf diese Weise ist der Zylinderkolben 9 über die Kolbenstange 7 in Längsrichtung des Druckzylinders 5 verschiebbar geführt.

Die Saugeinrichtung 3 steht mit dem dieser zugewandten, von dem Zylinderkolben 9 unterteilten Zylinderraum über eine im Zylinderdeckel 4 vorgesehene Durchgangsbohrung 13 in Verbindung, wobei sie mittels einer ebenfalls mit einer Durchgangsbohrung 14 versehenen Schraube 15 fluiddicht an dem dem Druckzylinder 5 abgewandten Ende der Durchgangsbohrung 13 des Zylinderdeckels 4 festgelegt ist. In der Durchgangsbohrung 13 des Zylinderdeckels 4 ist ein Luftfilter 16 in Form eines Vakuumfilters angeordnet, um einen Eintritt von Verunreinigungen, wie Staubpartikeln, Feuchtigkeit oder dergleichen, in den Innenraum des Zylinders 5 zu vermeiden.

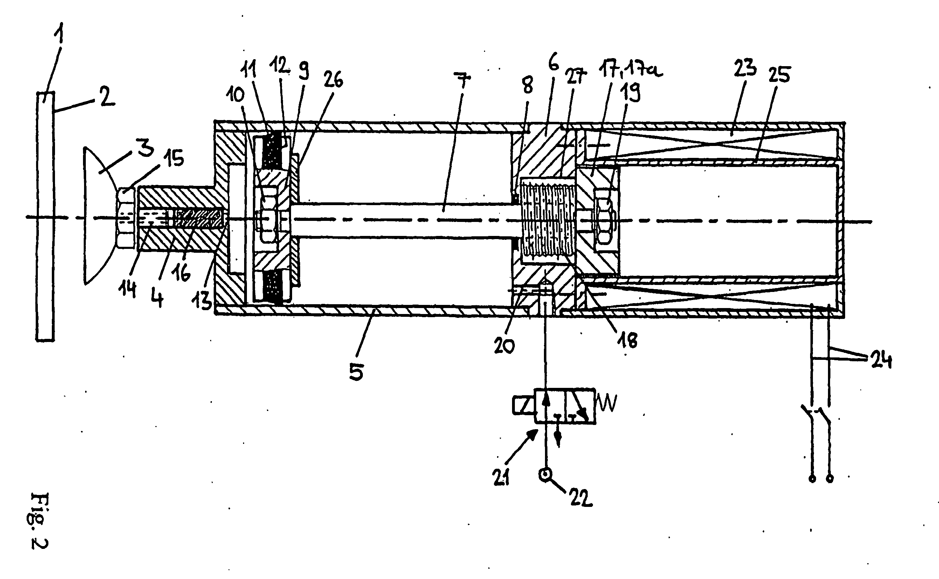

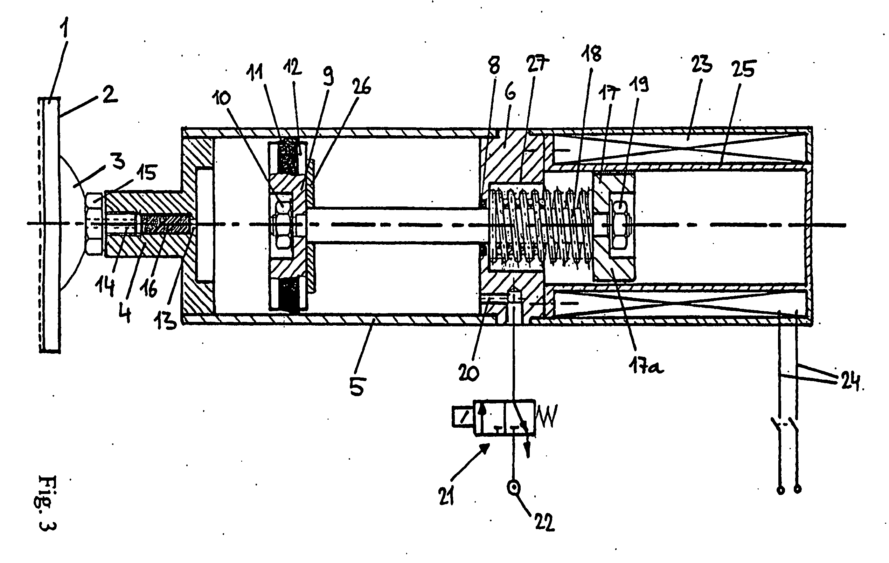

Der Zylinderkolben 9 ist derart vorbelastet, dass er den mit der Saugeinrichtung 3 korrespondierenden Zylinderraum zu vergrößern bestrebt ist, um in diesem Zylinderraum einen Unterdruck zu erzeugen, sobald der Zylinderkolben 9 aus seiner in Fig. 1 dargestellten Ruheposition, in welcher er an dem Zylinderboden 6 zur Anlage kommt, in seine in Fig. 2 gezeigte Position unmittelbar vor Ergreifen des Gegenstandes 2, in welcher er in Richtung der Saugeinrichtung 3 verschoben worden ist, verlagert und die Saugeinrichtung 3 auf die Oberfläche 2 des Gegenstandes 1 aufgesetzt worden ist (Fig. 3). Hierzu weist die Kolbenstange 7 an ihrem dem Zylinderkolben 9 entgegengesetzten Ende einen Bund 17 auf, wobei auf der Kolbenstange 7 eine sich sowohl an der der Saugeinrichtung 3 abgewandten Seite des Zylinderbodens 6 als auch an dem Bund 17 abstützende Schraubenfeder 18 sitzt, welche den Zylinderkolben 9 elastisch in Richtung des Zylinderbodens 6 und folglich in Richtung des der Saugeinrichtung 3 abgewandten Endes des Druckzylinders 5 vorbelastet. Der Bund 17 ist über ein stirnseitig an der Kolbenstange 7 angeordnetes Gewinde mittels einer Stellschraube 19 lösbar an der Kolbenstange 7 festgelegt, so dass der Bund 17 durch Drehen der Stellschraube 19 in Längsrichtung der Kolbenstange 7 verlagerbar und die von der Schraubenfeder 18 bewirkte Vorspannung durch Kompression derselben folglich veränderbar ist.

Der Antrieb des Zylinderkolbens 9 in die bezüglich seiner durch die Schraubenfeder 18 bewirkte Vorbelastung entgegengesetzte Richtung, also in Richtung der Saugeinrichtung 3, geschieht bei der gezeigten Ausführungsform der Umsetzvorrichtung wahlweise fluidisch, insbesondere pneumatisch mittels Luftdruck, oder elektromagnetisch. Zum Zwecke eines fluidischen Antriebs weist der zwischen dem Zylinderkolben 9 und dem Zylinderboden 6 angeordnete Zylinderraum einen Fluidanschluß 20 auf, welcher mit einem Stellglied 21 in Form eines als 3/2-Wegeventils ausgebildeten Steuerventils ausgestattet ist. Das Stellglied 21 ist wiederum mit einer Druckfluidquelle 22, beispielsweise einer Druckluftquelle, verbunden.

Zum Zwecke eines elektromagnetischen Antriebs des Zylinderkolbens 9 ist der mit der Kolbenstange 7 verbundene Bund 17 in Form eines Permanentmagneten 17a ausgebildet, welcher mit einem Elektromagneten 23 in Form einer über Leitungen 24 mit elektrischem Strom beaufschlagbaren Spule zusammenwirkt. Der Elektromagnet 23 ist dabei um den Umfang einer Abdeckung 25 angeordnet, welche an dem dem Druckzylinder 5 abgewandten, rückwärtigen Ende des Zylinderdeckels 6 lösbar festgelegt, beispielsweise verschraubt ist. Alternativ kann auch der Bund 17 mit einem Elektromagneten ausgestattet und ein Permanentmagnet anstelle des Elektromagneten 23 vorgesehen sein. Selbstverständlich ist auch ausschließlich ein fluidischer Antrieb des Zylinderkolbens 9 denkbar.

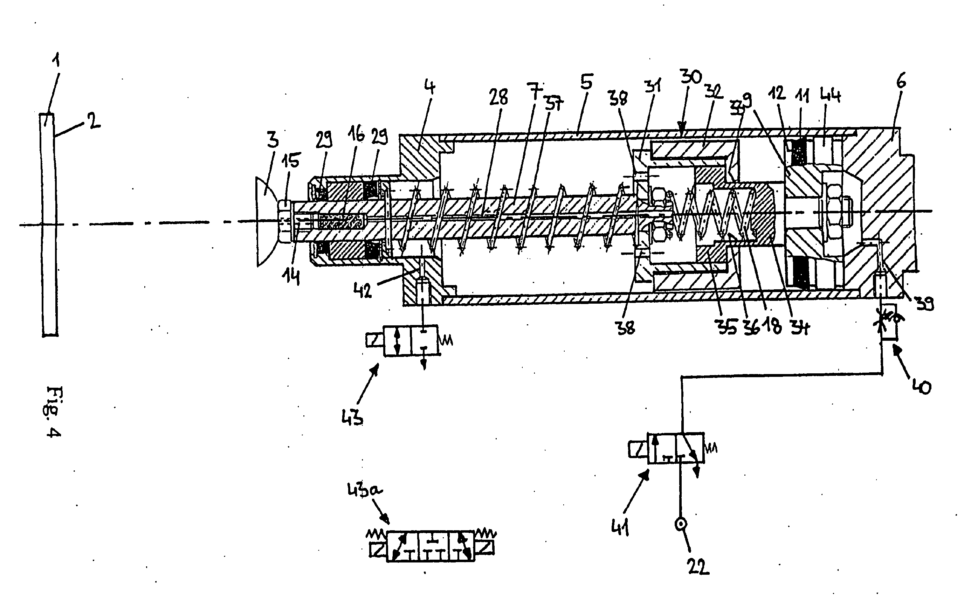

Zusätzlich kann der zwischen dem Zylinderkolben 9 und dem Zylinderdeckel 4 bzw. der Saugeinrichtung 3 angeordnete, mit dieser korrespondierende Zylinderraum einen Fluidanschluß aufweisen, welcher mit einem Stellglied, insbesondere in Form eines Vakuumsteuerventils, ausgestattet sein kann (nicht dargestellt), wie es weiter unten in Verbindung mit der Ausführungsform gemäß Fig. 4 bis 9 (Bezugszeichen 43) erläutert ist.

An der dem Zylinderboden 6 zugewandten Seite des Zylinderkolbens 9 ist ein Dämpfungsring 26 angeordnet, um die beim Auftreffen des Zylinderkolbens 9 auf den Zylinderboden 6 wirkende Stoßbelastung zum mildern. Ferner ist der Zylinderboden 6 an seiner der Saugeinrichtung 3 bzw. dem Druckzylinder 5 abgewandten Seite mit einer zentralen Aussparung 26 zur Aufnahme der Schraubenfeder 18 in der in Fig. 2 dargestellten Position des Zylinderkolbens 9 versehen.

Nachfolgend ist die Funktionsweise der Vorrichtung gemäß Fig. 1 bis 3 näher erläutert:

Zum Ergreifen des Gegenstandes 1 wird der Zylinderkolben 9 des Druckzylinders 5 aus seiner in Fig. 1 wiedergegebenen Ruheposition, in welcher er über den Dämpfungsring 26 mit dem Zylinderboden 6 in Kontakt steht, in die in Fig. 2 dargestellte Position überführt, in welcher der am rückwärtigen Ende der Kolbenstange 7 angeordnete Bund 17 an der dem Innenraum des Zylinders 5 abgewandten Seite des Zylinderbodens 6 zur Anlage kommt und die nunmehr vollständig komprimierte Schraubenfeder 18 vollständig in der Aussparung 27 des Zylinderbodens 6 aufgenommen ist. Hierzu wird entweder das Steuerventil 21 von seiner in Fig. 1 gezeigten Grundstellung (Durchlaß) in die in Fig. 2 wiedergegebene Stellung geschaltet, um die Druckfluidquelle 22 mit dem zwischen dem Zylinderkolben 9 und dem Zylinderboden 6 angeordneten Zylinderraum zu verbinden und den Zylinderkolben 9 folglich in Richtung der Saugeinrichtung 3 entgegen der durch die Schraubenfeder 18 bewirkten Vorbelastung zu verschieben. Alternativ oder zusätzlich wird der Elektromagnet 23 über die Leitungen 24 mit elektrischem Strom beaufschlagt und der Zylinderkolben 9 aufgrund des am entgegengesetzten Ende der Kolbenstange 7 sitzenden Permanentmagneten 17a induktiv in die in Fig. 2 wiedergegebene Position verschoben.

Sodann wird die Vorrichtung auf den umzusetzenden Gegenstand 1 zubewegt, so dass die Saugeinrichtung 3 im wesentlichen fluiddicht auf der Oberfläche 2 des Gegenstandes 1 zur Anlage kommt (Fig. 3). Im Falle eines fluidischen Antriebs wird schließlich das Steuerventil 21 aus der in Fig. 2 gezeigten Stellung (Verbindung mit der Druckfluidquelle) in die in Fig. 3 wiedergegebene Stellung (Durchlaß) geschaltet, wobei der in dem zwischen dem Zylinderkolben 9 und dem Zylinderboden 6 angeordneten Zylinderraum herrschende Überdruck abgebaut und der Zylinderkolben 9 infolge der elastischen Rückstellkraft der Schraubenfeder 18 in eine in Fig. 3 gezeigte Position bewegt wird, in welcher die Federkraft der Schraubenfeder 18 mit der infolge des zwischen dem Zylinderdeckel 4 und dem Zylinderkolben 9 angeordneten Zylinderraum erzeugten Unterdrucks, welcher zugleich an der mit diesem Zylinderraum korrespondierenden Saugeinrichtung 3 anliegt, im Gleichgewicht steht.

Die Schraubenfeder 18 kann dabei so dimensioniert sein, dass sich in dem mit der Saugeinrichtung 3 in Verbindung stehenden Zylinderraum ein Unterdruck von etwa 0,7 bar einstellt. Der Resthub des Zylinderkolbens 9, d.h. der Differenzweg desselben in der in Fig. 3 wiedergegebenen Position bezüglich der Ruheposition gemäß Fig. 1, kann zur Aufrechterhaltung des Unterdrucks bei geringfügigen Undichtigkeiten zwischen der Saugeinrichtung 3 und dem Gegenstand 1 und/oder in dem mit der Saugeinrichtung 3 in Verbindung stehenden Zylinderraum dienen. Dieser Resthub sollte zweckmäßig wenigstens 50% des Gesamthubes des Zylinderkolbens 9, d.h. des Differenzweges desselben in der in Fig. 2 dargestellten Position bezüglich der Ruheposition gemäß Fig. 1, betragen.

Nachdem die Umsetzvorrichtung mit dem an der Saugeinrichtung 3 festgesaugten Gegenstand 1 an den zum Deponieren des Gegenstandes 1 vorgesehenen Ort verbracht worden ist, wird entweder das Steuerventil 21 von seiner in Fig. 3 gezeigten Grundstellung (Durchlaß) in die in Fig. 2 wiedergegebene Stellung geschaltet, um die Druckfluidquelle 22 mit dem zwischen dem Zylinderkolben 9 und dem Zylinderboden 6 angeordneten Zylinderraum zu verbinden und den Zylinderkolben 9 folglich wieder in Richtung der Saugeinrichtung 3 zu verschieben, wobei der an der Saugeinrichtung 3 anliegende Unterdruck durch Kompression des mit dieser verbundenen Zylinderraumes abgebaut wird. Alternativ oder zusätzlich wird der Elektromagnet 23 wieder mit elektrischem Strom beaufschlagt und der Zylinderkolben 9 aufgrund des am entgegengesetzten Ende der Kolbenstange 7 sitzenden Permanentmagneten 17a in die in Fig. 2 wiedergegebene Position verschoben.

Die Position des Zylinderkolbens gemäß Fig. 2 zum Ablegen des Gegenstandes 2 entspricht der Position zum Ergreifen eines Gegenstandes und kann hierzu folglich beibehalten werden, um einen weiteren Gegenstand von seinem Ursprungsort an einen anderen Ort umzusetzen. Im Falle eines fluidischen Antriebes bedeutet dies, dass die Umsetzvorrichtung im Falle eines wiederholten Ansaugens und Ablegens von Gegenständen 1 für jeden Arbeitsgang nur eine einzige Zylinderfüllung an Druckfluid erfordert und folglich äußerst kostengünstig betrieben werden kann.

Die in Fig. 4 wiedergegebene Vorrichtung zum Umsetzen von Gegenständen 1 unterscheidet sich von der in Fig. 1 bis 3 dargestellten Vorrichtung insbesondere dadurch, dass die Saugeinrichtung 3 an dem dem Druckzylinder 5 abgewandten Ende der Kolbenstange 7 angeordnet ist und die Kolbenstange 7 den Zylinderdeckel 4 durchsetzt, so dass die Saugeinrichtung 3 über die Kolbenstange 7 teleskopierbar in dem Druckkolben 5 geführt ist. Die Kolbenstange 7 ist dabei mit einer in Längsrichtung angeordneten zentralen Durchgangsbohrung 28 versehen, an deren dem Druckzylinder 5 abgewandten Ende die Saugeinrichtung 3 unter Zwischenschaltung eines Luftfilters 16, wie eines Vakuumfilters, über eine Schraube 15 mit einer mit der Durchgangsbohrung 28 der Kolbenstange 7 fluchtenden Durchgangsbohrung 14 fluiddicht festgelegt ist. Die Kolbenstange 7 wiederum ist im Zylinderdeckel 4 unter Einsatz von Dichtringen 29 fluiddicht gelagert.

An ihrem der Saugeinrichtung 3 abgewandten Ende ist die Kolbenstange 7 an einem Führungselement 30 gelagert, welches an seiner der Kolbenstange 7 bzw. der mit dieser verbundenen Saugeinrichtung 3 abgewandten Seite mit dem Zylinderkolben 9 in Verbindung steht und über die Schraubenfeder 18 in Richtung von diesem weg vorbelastet ist. Das Führungselement 30 besteht beim gezeigten Ausführungsbeispiel aus einer an dem der Saugeinrichtung 3 abgewandten Ende der Kolbenstange 7 verschraubten Hülse 31, welche über ein Außengewinde mit einer weiteren Hülse 32 verschraubt ist. Die Hülse 32 weist an ihrer der Hülse 31 abgewandten Seite eine zentrale Öffnung 33 auf.

An der dem Führungselement 30 zugewandten Seite des Zylinderkolbens 9 ist ein Wellenstummel 34 festgelegt, welcher durch die Öffnung 33 in den von den Hülsen 31, 32 des Führungselementes 30 gebildeten Innenraum eingreift. Der Wellenstummel 34 ist endseitig mit einem als Widerlager dienenden Wellenbund 35 ausgestattet, welcher in der in Fig. 4 dargestellten Ruheposition an der dem Zylinderkolben 9 zugewandten Hülse 32 des Führungselementes 30 zur Anlage kommt.

Zur elastischen Vorbelastung des Zylinderkolbens 9 derart, dass er den mit der Saugeinrichtung 3 korrespondierenden Zylinderraum zu vergrößern bestrebt ist, stützt sich die Schraubenfeder 18 zwischen dem Führungselement 30 und dem Zylinderkolben 9 ab. Bei dem gezeigten Ausführungsbeispiel sitzt die Schraubenfeder 18 an ihrem der Kolbenstange 7 zugewandten Ende auf dem stirnseitigen Ende der Kolbenstange 7, während sie an ihrem dem Zylinderkolben 9 zugewandten Ende in einer in dem Wellenstummel 34 ausgeformten Aussparung 36 gehalten ist. Die Dichtmanschette 11 des Zylinderkolbens 9 ist wiederum derart in der Umfangsnut 12 angeordnet, dass ihre Dichtlippe in Richtung des der Saugeinrichtung 3 abgewandten Ende des Zylinderraumes zeigt.

Ferner ist das Führungselement 30 in Richtung der in Fig. 4 dargestellten, in den Druckzylinder 5 eingezogenen Stellung elastisch vorbelastet, was mittels einer auf der Kolbenstange 7 sitzenden Schraubenfeder 37 gewährleistet ist, welche sich einerseits an dem Zylinderdeckel 4, andererseits an der Hülse 31 des Führungselementes 30 abstützt. Dabei ist die Federkonstante der das Führungselement 30 vorbelastenden Schraubenfeder 37 geringer gewählt als die Federkonstante der den Zylinderkolben 9 vorbelastenden Schraubenfeder 18. Das Führungselement 30 ist fluiddurchlässig ausgebildet, indem es einerseits fluiddurchlässig im Druckzylinder 5 gelagert ist. Andererseits weist die Hülse 31 des Führungselementes 30 Durchgangsbohrungen 38 auf, welche den dem Zylinderdeckel 4 zugewandten Zylinderraum mit dem Innenraum des Führungselementes 30, in welchen der an dem Zylinderkolben 9 festgelegte Wellenstummel 34 über die Öffnung 33 eingreift, verbindet.

Während die in Fig. 4 wiedergegebene Umsetzvorrichtung grundsätzlich auch einen der Ausführungsform gemäß Fig. 1 bis 3 entsprechenden magnetischen oder auch einen motorischen Antrieb des Zylinderkolbens 9 aufweisen kann, ist beim vorliegenden Ausführungsbeispiel ein fluidischer, insbesondere pneumatischer, Antrieb vorgesehen. Hierzu ist der auf der der Saugeinrichtung 3 abgewandten Seite des Zylinderkolbens 9 angeordnete Zylinderraum mit einem Fluidanschluß 39 ausgestattet, an welchen sich ein Drosselrückschlagventil 40 sowie ein Stellglied 41 in Form eines 3/2-Wegeventils anschließen. Das Stellglied 41 ist wiederum mit einer Druckfluidquelle 22, beispielsweise einer Druckluftquelle, verbunden.

Der auf der der Saugeinrichtung 3 zugewandten Seite des Zylinderkolbens 9 angeordnete Zylinderraum weist einen weiteren Fluidanschluß 42 auf, an welchen sich ein weiteres Stellglied 43 anschließt, welches als 2/2-Wegeventil ausgestattet ist und zur Steuerung bzw. Überwachung des mittels des Zylinderkolbens 9 in diesem Zylinderraum erzeugbaren Unterdruckes dient. Alternativ kann beispielsweise auch ein in Fig. 4 mit dem Bezugszeichen 43a versehenes Stellglied vorgesehen sein, welches als 3/3-Wegeventil ausgebildet ist und ein Entlüften/Sperren bzw. Belüften des mit der Saugeinrichtung 3 korrespondierenden Zylinderraumes gewährleistet.

Der Zylinderkolben 9 trägt ferner einen ringförmigen Permanentmagneten 44, welcher z.B. mit stationär an der Außenseite des Druckzylinders 5 angeordneten Magnetschaltern (nicht dargestellt) zur automatischen Steuerung der Stellglieder 41, 43 in Abhängigkeit der Position des Zylinderkolbens 9 zusammenwirkt.

Nachfolgend ist die Funktionsweise der Vorrichtung gemäß Fig. 4 bis 9 näher erläutert.

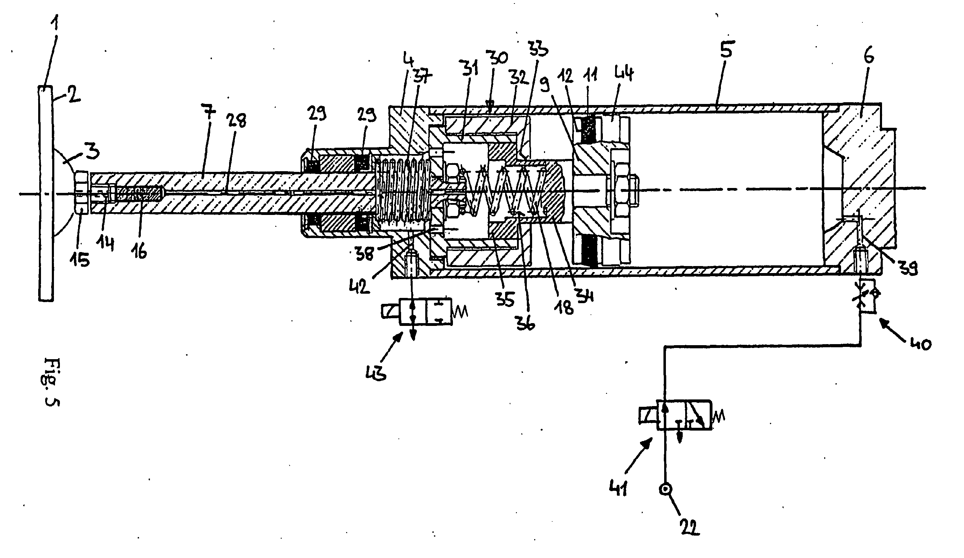

Zum Ergreifen des Gegenstandes 1 wird die Kolbenstange 7 mit der hieran stirnseitig festgelegten Saugeinrichtung 3 zunächst aus ihrer in Fig. 4 wiedergegebenen Ruheposition in die in Fig. 5 dargestellte Position teleskopiert, in der sie gänzlich aus dem Druckzylinder 5 ausgezogen ist und die Hülse 31 des Führungselementes 30 mit dem Zylinderdeckel 4 in Kontakt tritt. Hierzu werden einerseits das Stellglied 43 aus seiner in Fig. 4 gezeigten Stellung (Sperrstellung) in die in Fig. 5 wiedergegebene Stellung (Durchlaß) und das Stellglied 41 aus der in Fig. 4 dargestellten Stellung (Durchlaß) in die in Fig. 5 gezeigte Stellung geschaltet, in welcher das Stellglied 41 den Fluidanschluß 39 über das Drosselrückschlagventil 40 mit der Druckfluidquelle 22 verbindet. Dadurch baut sich in dem auf der der Saugeinrichtung 3 abgewandten Seite des Zylinderkolbens 9 angeordneten Zylinderraum ein Überdruck auf, so dass der Zylinderkolben 9 in Richtung des Zylinderdeckels 4 verlagert wird. Das Drosselrückschlagventil 40 verhindert dabei einen auf den Zylinderkolben 9 wirkenden Druckstoß. Zugleich verhindert das auf Durchlaß geschaltete Stellglied 43 (Fig. 5) den Aufbau eines Überdrucks in dem Zylinderraum auf der dem Zylinderdeckel 4 zugewandten Seite des Zylinderkolbens 9.

Da die Federkonstante der das Führungselement 31 vorbelastenden Schraubenfeder 37 geringer als die Federkonstante der den Zylinderkolben 9 vorbelastenden Schraubenfeder 18 gewählt ist, wird dabei zunächst die Schraubenfeder 37 vollständig komprimiert, so dass das Führungselement 30 an der Innenseite des Zylinderdeckels 4 zur Anlage kommt. Die Schraubenfeder 18 ist zu diesem Zeitpunkt noch gar nicht oder nur geringfügig komprimiert (Fig. 5).

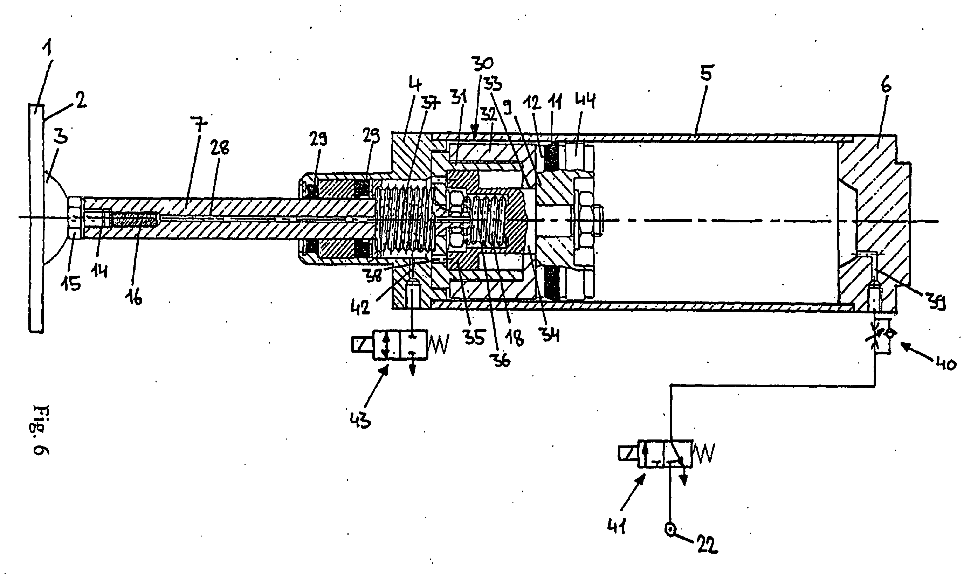

Sobald die Kolbenstange ihre in Fig. 5 wiedergegebene vordere Endstellung erreicht hat, in welcher das Führungselement 30 an der Innenseite des Zylinderdeckels 4 anliegt, befindet sich die Saugeinrichtung 3 in ihrem auf die Oberfläche 2 des zu ergreifenden Gegenstandes 1 aufgesetzten Zustand. Infolge Aufrechterhaltung des durch die Druckfluidquelle 22 erzeugten Überdruckes in dem Zylinderraum auf der dem Zylinderdeckel 4 abgewandten Seite des Zylinderkolbens 9 wird nunmehr der Zylinderkolben 9 entgegen der durch die Schraubenfeder 18 bewirkten Vorspannung in Richtung des Führungselements 30 verschoben, bis der Zylinderkolben 9 an der ihm zugewandten Hülse 32 des Führungselementes 30 zur Anlage kommt (Fig. 6). Währenddessen wird das Stellglied 43 weiterhin in seiner in Fig. 5 wiedergegebenen Durchlaßstellung gehalten, um zu verhindern, dass der Gegenstand 2 durch die aus dem komprimierten Zylinderraum über die in der Kolbenstange 7 angeordnete Durchgangsbohrung 28 verdrängte Luft weggeblasen wird.

In dieser in Fig. 6 wiedergegebenen Position des Zylinderkolbens 9 werden das Stellglied 43 wieder aus seiner Durchlaßstellung gemäß Fig. 5 in die in Fig. 6 wiedergegebene Sperrstellung und das Stellglied 41 aus der in Fig. 5 gezeigten Durchlaßstellung, in welcher die Druckfluidquelle 22 mit dem Zylinderraum auf der dem Zylinderdeckel 4 abgewandten Seite des Zylinderkolbens 9 korrespondiert, in die in Fig. 6 gezeigte Sperrstellung geschaltet, so dass der Überdruck in dem Zylinderraum auf der dem Zylinderdeckel 4 abgewandten Seite des Zylinderkolbens abgebaut und dort Normaldruck eingestellt wird.

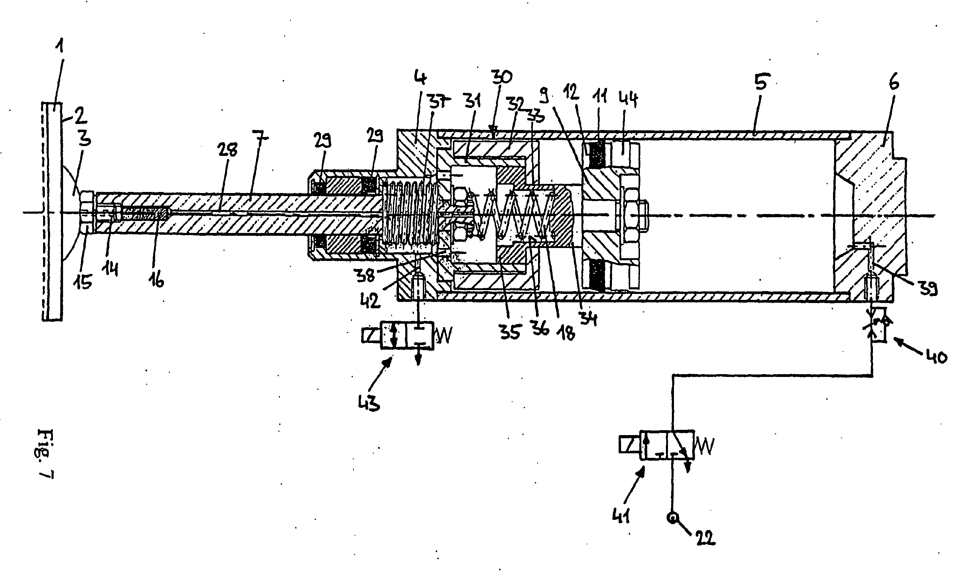

Nach Abbau des Überdruckes in dem auf der dem Zylinderdeckel 4 abgewandten Seite des Zylinderkolbens 9 angeordneten Zylinderraum wird der Zylinderkolben 9 infolge der durch die Schraubenfeder 18 auf ihn wirkenden elastischen Vorbelastung aus der in Fig. 6 gezeigten Position in die in Fig. 7 wiedergegebene Position verlagert, in welcher der Wellenbund 35 des Wellenstummels 34 innenseitig an der Hülse 32 des Führungselementes 30 zur Anlage kommt. Aufgrund der gegenüber der Schraubenfeder 18 geringen Federkonstanten der Schraubenfeder 37 verbleibt diese zunächst in der im wesentlichen vollständig komprimierten Position gemäß Fig. 7. Die Arbeitsposition der Umsetzvorrichtung gemäß Fig. 7 entspricht insoweit der in Fig. 5 wiedergegebenen Position, wobei die Stellglieder 41, 43 jeweils in die entgegengesetzte Position verschaltet sind.

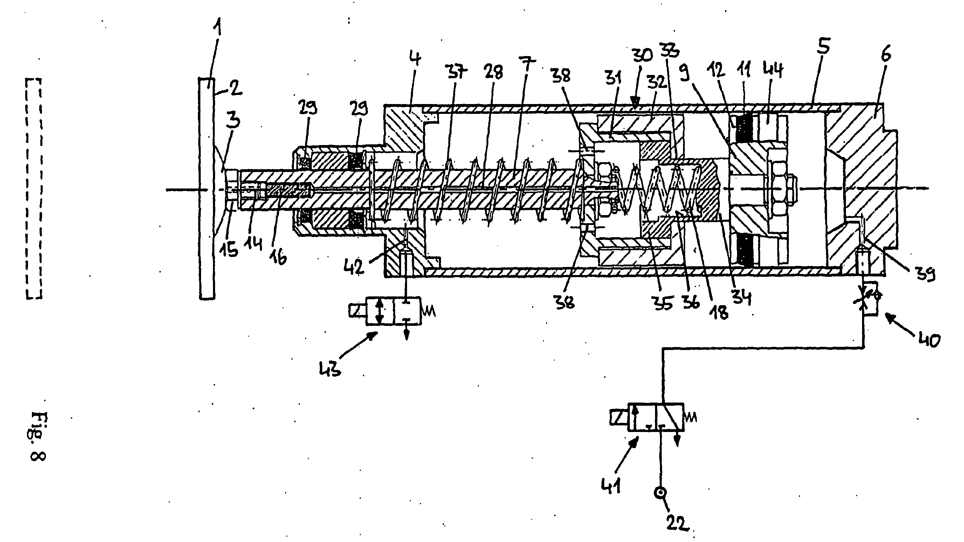

Der durch die Verlagerung des Zylinderkolbens 9 in dem Zylinderraum auf der dem Zylinderdeckel 4 zugewandten Seite des Zylinderkolbens 9 erzeugte Unterdruck wirkt über die in der Kolbenstange 7 angeformte Durchgangsbohrung 28 auf die Saugeinrichtung 3, so dass der Gegenstand 2 an dieser festgesaugt wird. Nach im wesentlichen vollständiger Expansion der den Zylinderkolben 9 vorbelastenden Schraubenfeder 18 wird je nach Federkonstanten der das Führungselement 30 vorbelastenden Schraubenfeder 37 das Führungselement 30 gemeinsam mit dem Zylinderkolben 9 und somit die über die Kolbenstange 7 mit dem Führungselement 30 verbundene Saugeinrichtung 3 weiter in eine in Fig. 8 wiedergegebene Position in den Druckzylinder 5 eingeschoben. Während dieser Verlagerung der Saugeinrichtung 3 steigt der Unterdruck in dem mit der Saugeinrichtung 3 korrespondierenden Zylinderraum noch an.

Die Schraubenfedern 18, 37 können wiederum derart dimensioniert sein, dass sich in dem mit der Saugeinrichtung 3 in Verbindung stehenden Zylinderraum ein Unterdruck von etwa 0,7 bar einstellt. Der Resthub des Zylinderkolbens 9, d.h. der Differenzweg desselben in der in Fig. 8 wiedergegebenen Position bezüglich der Ruheposition gemäß Fig. 4, kann zur Aufrechterhaltung des Unterdrucks bei geringfügigen Undichtigkeiten zwischen der Saugeinrichtung 3 und dem Gegenstand 1 und/oder in dem mit der Saugeinrichtung 3 korrespondierenden Zylinderraum dienen.

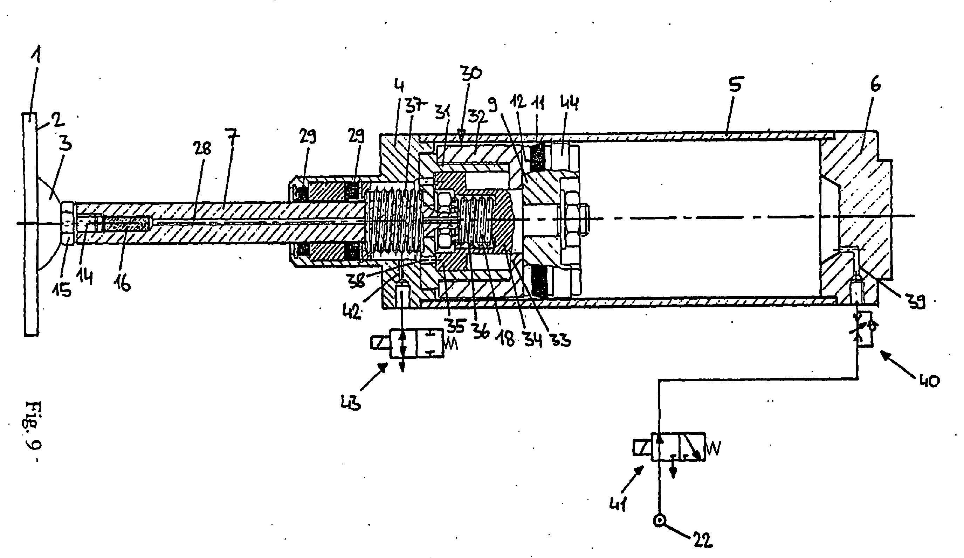

Nachdem die Umsetzvorrichtung mit dem an der Saugeinrichtung 3 festgesaugten Gegenstand 1 an den zum Deponieren des Gegenstandes 1 vorgesehenen Ort verbracht worden ist, werden das Stellglied 43 aus seiner Sperrstellung gemäß Fig. 8 wieder in die in Fig. 9 gezeigte Grundstellung (Durchlaß) sowie das Stellglied 41 von der in Fig. 8 wiedergegebenen Durchlaßstellung in die in Fig. 9 gezeigte Stellung, in der der Zylinderraum auf der dem Zylinderdeckel 4 abgewandten Seite des Zylinderkolbens 9 mit der Druckfluidquelle 22 in Verbindung steht, geschaltet. Hierdurch wird auf die zuvor beschriebene Weise wiederum zunächst das Führungselement 30 in die Kontaktposition mit dem Zylinderdeckel 4 und sodann der Zylinderkolben 9 in die Kontaktposition mit der Hülse 32 des Führungselementes 30 überführt (Fig. 9), wobei die Kolbenstange 7 mit der Saugeinrichtung 3 wiederum gänzlich aus dem Druckzylinder 5 ausgezogen wird. Der an der Saugeinrichtung 3 anliegende Unterdruck wird aufgrund der Verkleinerung des mit diesem korrespondierenden Zylinderraumes abgebaut und der Gegenstand 2 von der Saugeinrichtung 3 gelöst.

Um nach dem beschriebenen Umsetzvorgang des Gegenstandes 1 einen weiteren Gegenstand zu ergreifen, ist es erforderlich, das mit dem Zylinderraum, welcher mit der Saugeinrichtung 3 korrespondiert, in Verbindung stehende Stellglied 43 aus der in Fig. 8 dargestellten Sperrstellung in die Durchlaßstellung gemäß Fig. 9 zu schalten und die Druckfluidquelle 22 durch Umschalten des Stellgliedes 41 aus der in Fig. 9 gezeigten Stellung in die Grundstellung (Fig. 4) von dem Zylinderraum auf der dem Zylinderkolben 9 abgewandten Seite des Zylinderdeckels 4 zu trennen. Hierdurch wird wiederum zunächst ausschließlich der Zylinderkolben 9 und sodann mit diesem gemeinsam das Führungselement 30 in den Druckzylinder 5 eingeschoben, wobei aufgrund des auf Durchlaßstellung geschalteten Stellgliedes 43 sich an der Saugeinrichtung 3 kein Unterdruck mehr aufbauen kann, so dass der abgelegte Gegenstand 1 nicht erneut ergriffen wird.

Der gesamte Arbeitsgang kann dabei auf automatisierte Weise geschehen, indem die am Umfang des Druckzylinders 5 angeordneten Magnetschalter (nicht gezeigt) in Abhängigkeit von der Position des Zylinderkolbens 9 mit dem an diesem festgelegten Permanentmagneten 44 in Wechselwirkung treten und die Stellglieder 41, 43 in der jeweils erläuterten Weise automatisch umschalten.

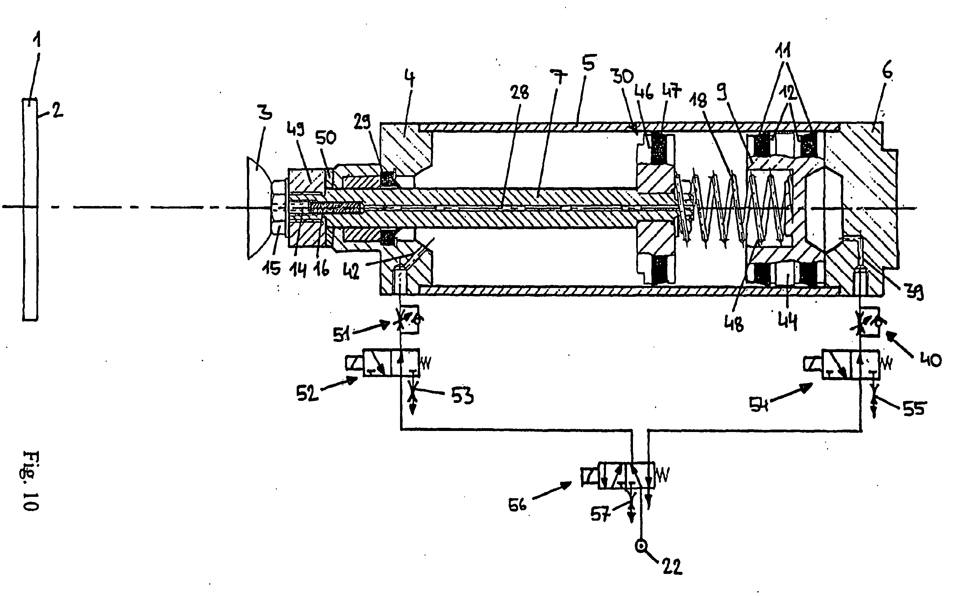

Fig. 10 zeigt eine gegenüber der Umsetzvorrichtung gemäß Fig. 4 bis 9 abgewandelte Vorrichtung, bei welcher das an dem der Saugeinrichtung 3 abgewandten Ende der Kolbenstange 7 mittels einer Schraube festgelegte Führungselement 30 über eine in einer Umfangsnut 46 angeordneten Dichtmanschette 47 fluiddicht gegen die Innenwand des Druckzylinders 5 abgedichtet ist. Zur elastischen Vorbelastung des beim vorliegenden Ausführungsbeispiel über ein Paar von Dichtmanschetten 11 oder gegebenenfalls auch nur über eine Dichtmanschette (nicht gezeigt) gegen die Innenwand des Druckzylinders 5 abgedichteten Zylinderkolbens 9 dient die zwischen dem Zylinderkolben 9 und dem Führungselement 30 wirkende Schraubenfeder 18. Die Schraubenfeder 18 sitzt einerseits auf der dem Zylinderkolben 9 zugewandten Stirnseite des Führungselementes 30 und ist andererseits in einer Aussparung 48 an der dem Führungselement 30 zugewandten Seite des Zylinderkolbens 9 gehalten.

An dem der Saugeinrichtung 3 zugewandten Ende der Kolbenstange 7 ist ein Anschlagbund 49 angeordnet, welcher über einen Dämpfungsring 50 in der in Fig. 10 dargestellten Ruheposition mit der äußeren Stirnseite des Zylinderdeckels 4 in Kontakt steht. Die Saugeinrichtung 3 korrespondiert über die Durchgangsberührung 14 der Schraube 15, den insbesondere als Vakuumfilter ausgebildeten Luftfilter 16 sowie die zentrale Durchgangsbohrung 28 in der Kolbenstange 7 ausschließlich mit dem zwischen dem Führungselement 30 und dem Zylinderkolben 9 angeordneten Zylinderraum, wobei der Zylinderkolben 9 infolge der durch die Schraubenfeder 18 bewirkten Vorspannung derart vorbelastet ist, dass er diesen Zylinderraum zu vergrößern bestrebt ist. Die Kolbenstange 7 ist am Zylinderdeckel 4 unter Zwischenschaltung eines Dichtrings 29 fluiddicht gelagert.

Der Antrieb des Zylinderkolbens 9 erfolgt bei der Umsetzvorrichtung gemäß Fig. 10 wiederum fluidisch, insbesondere pneumatisch. Hierzu korrespondiert der Fluidanschluß 42 mit dem zwischen dem Zylinderdeckel 4 und dem Führungselement 30 angeordneten Zylinderraum. An den Fluidanschluß 42 ist ein Drosselrückschlagventil 51 sowie ein Stellglied 52 in Form eines 3/2-Wegeventils angeschlossen, dessen Entlüftungsanschluß mit einer Festdrossel 53 ausgestattet ist. Desgleichen weist der zwischen dem Zylinderkolben 9 und dem Zylinderboden 6 angeordnete Zylinderraum einen Fluidanschluß 39 auf, an welchen sich das Drosselrückschlagventil 40 und ein dem Stellglied 52 entsprechendes Stellglied 54 in Form eines 3/2-Wegeventils anschließen, dessen Entlüftungsanschluß ebenfalls mit einer Festdrossel 55 ausgestattet ist. Die mit den Stellgliedern 52, 54 ausgestatteten Fluidanschlüsse 39, 42 sind mit einem weiteren Stellglied 56 in Form eines 5/2-Wegeventils verbunden. An das Stellglied 56 schließt sich einerseits eine Drosselstrecke 57, andererseits eine Druckfluidquelle 22 an, wobei das Stellglied 56 eine gemeinsame Ansteuerung der mit den Stellgliedern 52, 54 ausgestatteten Fluidanschlüsse 42, 39 gewährleistet.

Der Zylinderkolben 9 trägt wiederum einen Permanentmagneten 44, welcher mit stationär an dem Druckzylinder 5 angeordneten Magnetschaltern (nicht dargestellt) zur automatischen Steuerung der Stellglieder 52, 54, 56 in Abhängigkeit der Position des Zylinderkolbens 9 zusammenwirkt.

Nachfolgend ist die Funktionsweise der Vorrichtung gemäß Fig. 10 bis 16 näher erläutert:

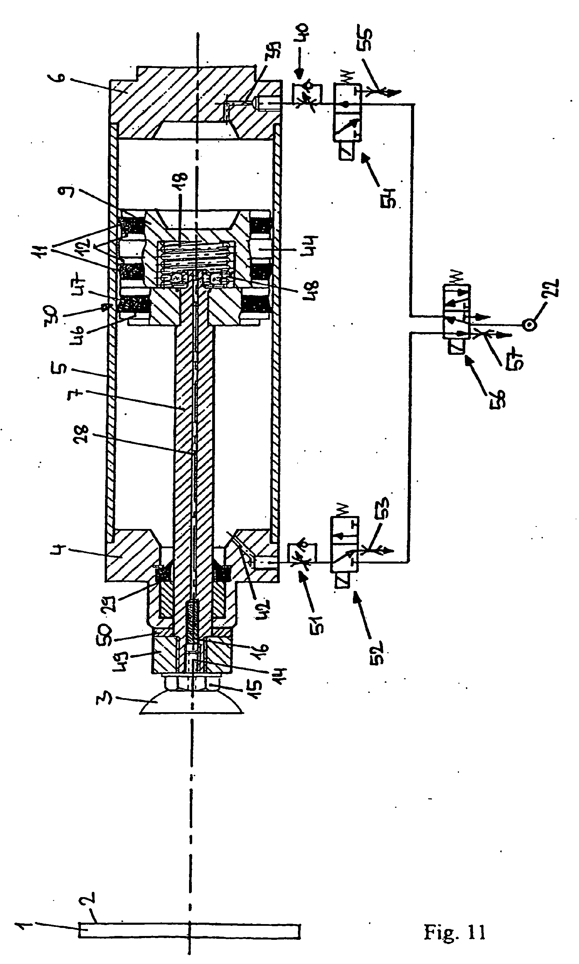

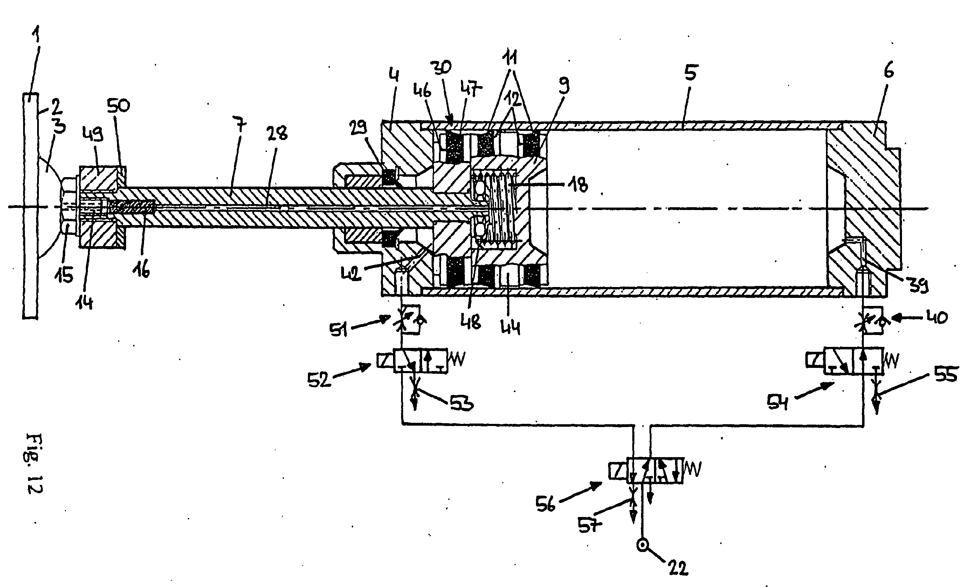

Zum Ergreifen des Gegenstandes 1 wird die Kolbenstange 7 mit der hieran stirnseitig festgelegten Saugeinrichtung 3 zunächst aus ihrer in Fig. 10 dargestellten Ruheposition in die in Fig. 12 wiedergegebene Position teleskopiert, in der sie gänzlich aus dem Druckzylinder 5 aufgezogen ist. Hierzu werden das Stellglied 52 aus seiner in Fig. 10 gezeigten Stellung, in welcher es den auf der der Saugeinrichtung 3 zugewandten Seite des Führungselementes 30 angeordneten Zylinderraum über den Fluidanschluß 42, das Drosselrückschlagventil 51 und das Stellglied 56 mit der Druckfluidquelle 22 verbindet, in die in Fig. 11 und 12 wiedergegebene Stellung (Durchlaß nach außen über die Festdrossel 53) und das Stellglied 56 aus seiner in Fig. 10 dargestellten Stellung, in welcher es den auf der der Saugeinrichtung 3 abgewandten Seite des Zylinderkolbens 9 angeordneten-Zylinderraum über den Fluidanschluß 39, das Drosselrückschlagventil 40 und das Stellglied 54 mit der Umgebung verbindet, in die in Fig. 11 und 12 wiedergegebene Stellung geschaltet, in welcher die Druckfluidquelle 22 über das Stellglied 54 mit dem Zylinderraum auf der der Saugeinrichtung 3 abgewandten Seite des Zylinderkolbens 9 korrespondiert.

Hierbei wird der Zylinderkolben 9 zunächst aus seiner Ruheposition gemäß Fig. 10, in der er am Zylinderboden 6 anliegt, in die in Fig. 11 wiedergegebene Stellung verschoben, in welcher er an dem Führungselement 30 zur Anlage kommt. Dabei wird der mit der Saugeinrichtung 3 korrespondierende, zwischen dem Führungselement 30 und dem Zylinderkolben 9 angeordnete Zylinderraum unter Kompression der Schraubenfeder 18 verkleinert und schließlich praktisch vollständig komprimiert. Eine Längsverschiebung des Führungselementes 30 mit der hieran über die Kolbenstange 7 angeordneten Saugeinrichtung 3 wird bis zu diesem Zeitpunkt dadurch weitestgehend verhindert, indem die Festdrossel 53 des Stellgliedes 52 der aus dem zugehörigen Zylinderraum austretenden Luft und damit einer möglichen Verschiebung des Führungselementes 30 in Richtung des Zylinderdeckels 4 einen gewissen Gegendruck entgegensetzt. Auf diese Weise wird sichergestellt, dass beim Aufsetzen der Saugeinrichtung 3 auf die Oberfläche 2 des Gegenstandes 1 (Fig. 12) der mit der Saugeinrichtung 3 korrespondierende Zylinderraum zwischen dem Führungselement 30 und dem Zylinderkolben 9 bereits vollständig komprimiert ist, so dass insbesondere leichte Gegenstände 1 während des Aufsetzens der Saugeinrichtung 3 nicht aus ihrer Entnahmeposition weggeblasen werden können.

Bei fortwährendem Überdruck in dem Zylinderraum auf der der Saugeinrichtung 3 abgewandten Seite des Zylinderkolbens 9 infolge der Verbindung der Druckfluidquelle 22 mit diesem Zylinderraum über die Stellglieder 54, 56 wird das Führungselement 30 über den Zylinderkolben 9 unter Anlage an demselben weiter von der in Fig. 11 wiedergegebenen Position in die in Fig. 12 gezeigte Position überführt, in welcher die Kolbenstange 7 gänzlich aus dem Druckzylinder 5 ausgezogen ist und die Saugeinrichtung 3 mit der Oberfläche 2 des Gegenstandes 1 in Kontakt tritt. Der Zylinderkolben 9 liegt dabei unter Kompression der Schraubenfeder 18 fortwährend an dem Führungselement 30 und dieses wiederum an der Innenseite des Zylinderdeckels 4 an. Während des gesamten Ausziehvorgangs der Kolbenstange 7 aus dem Druckkolben 5 entweicht die Luft in dem Zylinderraum zwischen dem Zylinderdeckel 4 und dem Führungselement 30 über den Fluidanschluß 42, das Drosselrückschlagventil 51 und die Festdrossel 53 des Stellgliedes 52.

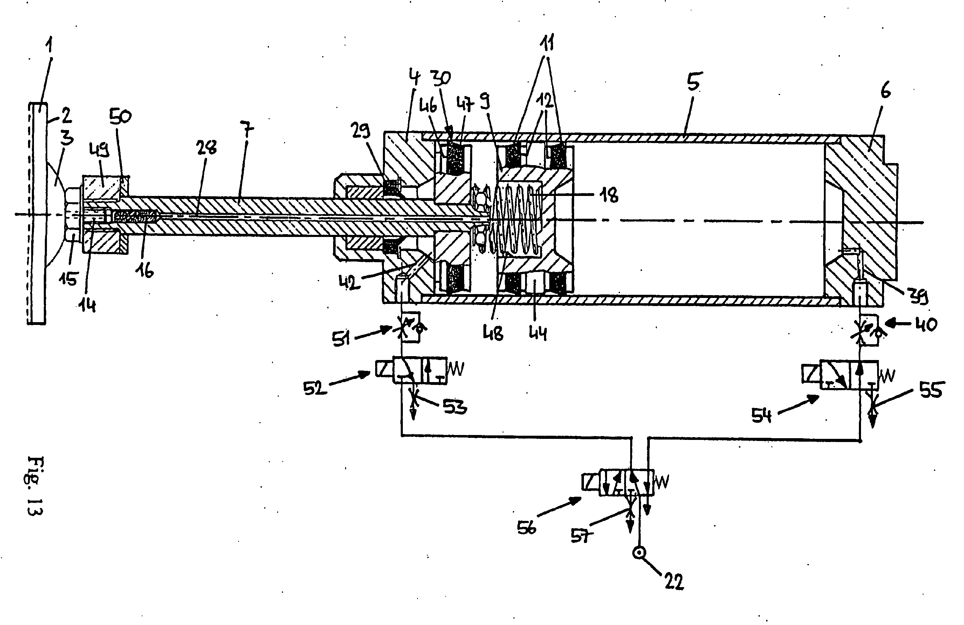

Um an der Saugeinrichtung 3 einen Unterdruck zu erzeugen, wird nun das Stellglied 56 aus seiner in Fig. 11 und 12 dargestellten Stellung wieder in seine in Fig. 13 gezeigte Ruhestellung geschaltet, so dass sich in dem zwischen dem Zylinderkolben 9 und dem Zylinderboden 6 angeordneten Zylinderraum über die Stellglieder 54, 56 Umgebungsdruck einstellt. Infolge der von der Schraubenfeder 18 auf den Zylinderkolben 9 wirkenden Vorbelastung wird letzterer dabei in Richtung des Zylinderbodens 6 von dem Führungselement 30 weg verlagert, wobei der zwischen diesen angeordnete, mit der Saugeinrichtung 3 korrespondierende Zylinderraum vergrößert und hierdurch an der Saugeinrichtung 3 ein Unterdruck angelegt wird.

Die Schraubenfeder 18 kann dabei wiederum etwa derart dimensioniert sein, dass sie den Zylinderkolben 9 so weit von dem Führungselement 30 wegverlagert, dass sich in dem mit der Saugeinrichtung 3 in Verbindung stehenden Zylinderraum ein Unterdruck von etwa 0,7 bar einstellt. Der verbleibende Restvakuumhub, d.h. die Differenz des Abstandes zwischen dem Führungselement 30 und dem Zylinderkolben 9 in der in Fig. 13 dargestellten Position und in der Position gemäß Fig. 10, in welcher die Schraubenfeder 18 praktisch vollständig expandiert ist, dient zur Aufrechterhaltung des Unterdruckes während der Verlagerung der Kolbenstange 7 und somit zur Aufrechterhaltung des erforderlichen Unterdrucks bei geringfügigen Undichtigkeiten des mit der Saugeinrichtung 3 korrespondierenden Zylinderraumes zwischen dem Führungselement 30 und dem Zylinderkolben 9.

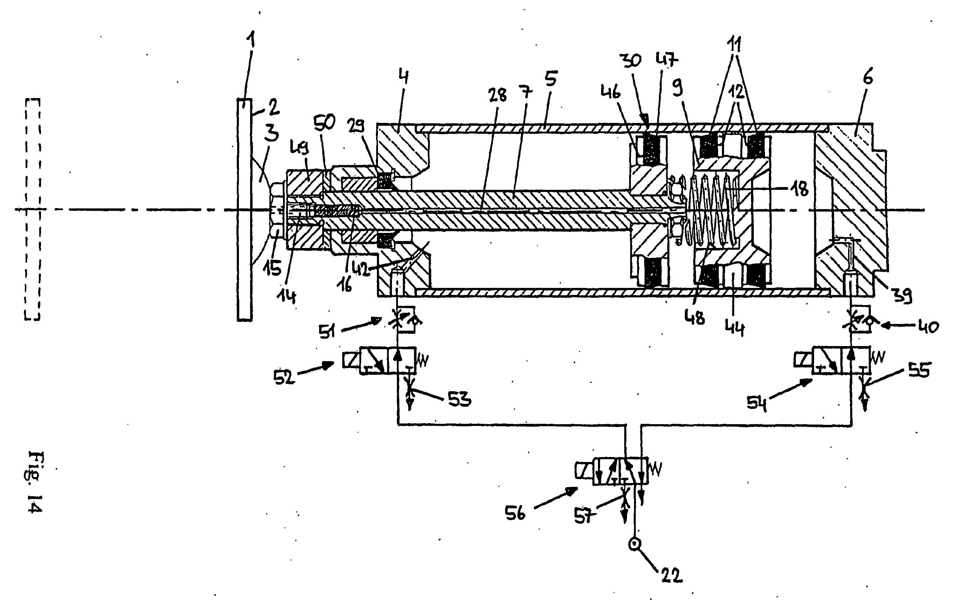

Sobald der Zylinderkolben 9 von dem Führungselement 30 weg bewegt worden ist (Fig. 13), wird das Stellglied 52 von seiner Stellung gemäß Fig. 13 (Durchlaß nach außen über die Festdrossel 53) in seine in Fig. 14 wiedergegebene Stellung geschaltet, in welcher es die Druckfluidquelle 22 über das Stellglied 56 mit dem zwischen dem Zylinderdeckel 4 und dem Führungselement 30 angeordneten Zylinderraum verbindet. Dadurch wird die Kolbenstange 5 aus ihrer vorderen Endposition, in welcher das Führungselement 30 an dem Zylinderdeckel 4 anliegt (Fig. 13), in Richtung des Zylinderbodens 6 in den Druckzylinder 5 eingeschoben. Der Zylinderraum zwischen dem Zylinderkolben 9 und dem Zylinderboden 6 ist dabei über den Fluidanschluß 39, das Drosselrückschlagventil 40 und die Stellglieder 54, 56 nach wie vor mit der Umgebung verbunden, so dass der Zylinderkolben 9 gemeinsam mit dem Führungselement 30 unter Aufrechterhaltung des Unterdruckes in dem zwischen diesen angeordneten Zylinderraum in den Druckzylinder 5 eingeschoben wird. Auf diese Weise wirkt der an der Saugeinrichtung 3 anliegende Unterdruck fort und wird der Gegenstand 1 aus seiner in Fig. 14 strichliniert wiedergegebenen Aufnahmestellung angehoben. Der an dem der Saugeinrichtung 3 zugewandten Ende der Kolbenstange 49 angeordnete Anschlagbund 49 kommt über dem Dämpfungsring 50 an der Stirnseite des Zylinderdeckels 4 zur Anlage.

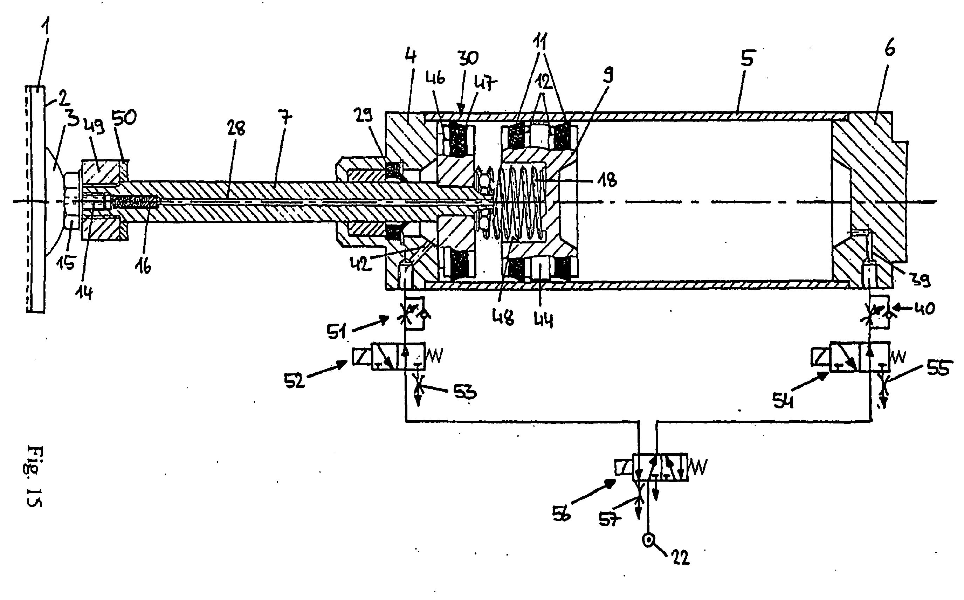

Nachdem die Umsetzvorrichtung mit dem an der Saugeinrichtung 3 festgesaugten Gegenstand 1 an dem zum Deponieren des Gegenstandes 1 vorgesehenen Ort verbracht worden ist, wird die Kolbenstange 7 mit der Saugeinrichtung 3 zum Ablegen des Gegenstandes 2 aus ihrer in den Druckkolben 5 eingeschobenen Position gemäß Fig. 14 wieder in die aus demselben ausgezogene, in Fig. 15 gezeigte Position teleskopiert. Zu diesem Zweck wird das Stellglied 56 aus seiner in Fig. 14 gezeigten Stellung, in welcher es den zwischen dem Zylinderdeckel 4 und dem Führungselement 30 angeordneten Zylinderraum mit der Druckfluidquelle 22 verbindet, in seine in Fig. 15 wiedergegebene Stellung geschaltet, in welcher es die Druckfluidquelle 22 über das Stellglied 54 mit dem Zylinderraum zwischen dem Zylinderboden 6 und dem Zylinderkolben 9 auf dessen der Saugeinrichtung 3 abgewandten Seite verbindet. Bezüglich des zwischen dem Zylinderdeckel 4 und dem Führungselement 30 angeordneten Zylinderraumes sind die mit dem Fluidanschluß 42 verbundenen Stellglieder 52, 56 auf Durchlaß geschaltet, so dass dort Umgebungsdruck anliegt.

Auf diese Weise wird das Führungselement 30 mit der Kolbenstange 7 von dem Zylinderkolben 9 wieder in die in Fig. 15 gezeigte Position verschoben, in der die Kolbenstange 7 gänzlich aus dem Druckzylinder 5 ausgezogen ist und das Führungselement 30 an der Innenseite des Zylinderdeckels 4 zur Anlage kommt. Die Vorbelastung des Zylinderkolbens 9 mittels der Schraubenfeder 18 von dem Führungselement 30 fort sorgt während des gesamten Ausziehvorgangs für eine Aufrechterhaltung des an der Saugeinrichtung 3 anliegenden Unterdrucks. Ferner verhindert die Drosselstrecke 57 des Stellglieds 56 ein zu schnelles Ausziehen des Zylinderkolbens 7 aus dem Druckzylinder 5, was insbesondere beim Betreiben der Vorrichtung in senkrechter Anordnung mit schweren Werkstücken von Vorteil ist.

Wie bereits erwähnt, befindet sich der Zylinderkolben 7 mit der Saugeinrichtung 3 in seiner in Fig. 15 wiedergegebenen, aus dem Druckzylinder 5 ausgezogenen Position wieder in derjenigen Position, in welcher der Gegenstand abgelegt wird. Der Ablegevorgang wird in dieser Position dadurch gewährleistet, dass der Zylinderkolben 9 unter fortwährendem Überdruck in dem zwischen dem Zylinderkolben 9 und dem Zylinderboden 6 angeordneten Zylinderraum entgegen der von der Schraubenfeder 18 bewirkten Vorbelastung weiter in Richtung des Zylinderdeckels 4 verschoben wird, so dass er mit dem Führungselement 30 in Kontakt tritt (vgl. Fig. 12). Dabei wird der zwischen dem Führungselement 30 und dem Zylinderkolben 9 angeordnete, mit der Saugeinrichtung 3 korrespondierende Zylinderraum praktisch vollständig komprimiert, so dass an der Saugeinrichtung 3 kein Unterdruck mehr anliegt und der Gegenstand 1 von der Saugeinrichtung 3 gelöst wird.

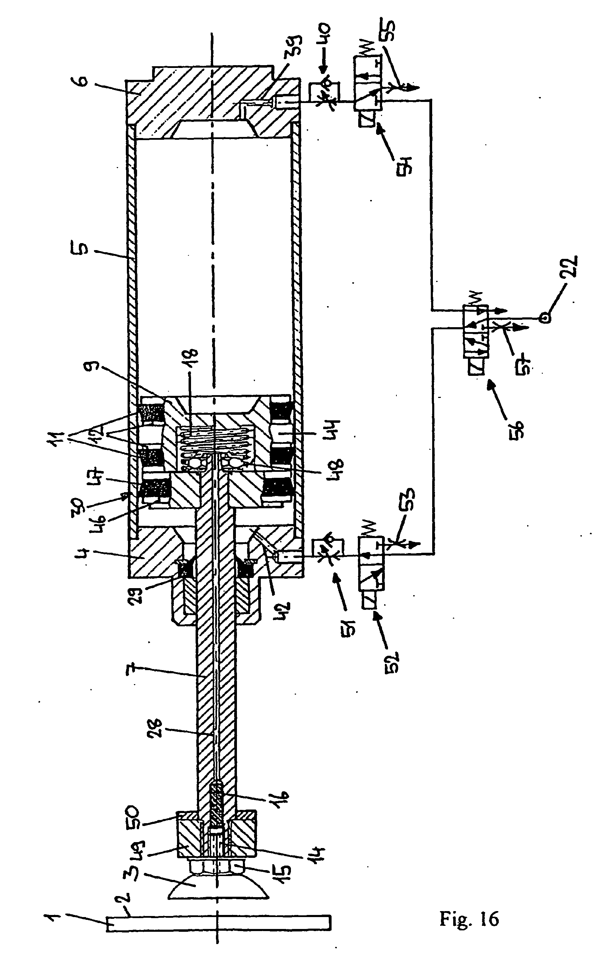

Zum Einschieben der Kolbenstange 7 in den Druckzylinder 5 wird daraufhin das Stellglied 56 aus seiner Stellung gemäß Fig. 15 in die in Fig. 16 gezeigte Stellung geschaltet, in welcher es den zwischen dem Zylinderdeckel 4 und dem Führungselement 30 angeordneten Zylinderraum über den Fluidanschluß 42 und die Stellglieder 52, 56 mit der Druckfluidquelle 22 verbindet. Zugleich wird das Stellglied 54 von seiner in Fig. 15 wiedergegebenen Stellung in die in Fig. 16 gezeigte Stellung geschaltet, in welcher es den zwischen dem Zylinderkolben 9 und dem Zylinderboden 6 angeordneten Zylinderraum über den Fluidanschluß 39 und die Festdrossel 55 des Stellgliedes 54 mit der Umgebung verbindet. Dadurch wird das Führungselement 30 mit der Kolbenstange 7 und mit diesem der Zylinderkolben 9 in den Druckzylinder 5 eingeschoben, wobei die Festdrossel 55 für einen entgegen der von der Schraubenfeder 18 auf den Zylinderkolben 9 bewirkten Vorbelastung wirkenden Druck auf den Zylinderkolben 9 in Richtung des Führungselementes 30 sorgt, so dass beim Einschieben der Kolbenstange 7 in den Druckzylinder 5 der Zylinderkolben 9 mit dem Führungselement 30 im wesentlichen in Kontakt bleibt. Dadurch baut sich an der Saugeinrichtung 3 nicht nochmals ein Unterdruck auf und ist sichergestellt, dass der abgelegte Gegenstand 1 nicht erneut ergriffen wird.

Sobald sich die Saugeinrichtung 30 hinreichend weit von dem Gegenstand 1 entfernt hat, kann das Stellglied 54 wieder von der in Fig. 16 wiedergegebenen Stellung in seine Ruhestellung (vgl. z.B. Fig. 10) geschaltet werden, so dass die Festdrossel 55 des Stellgliedes 56 überbrückt wird. Dadurch wirkt auf die dem Führungselement 30 abgewandte Seite des Zylinderkolbens 9 praktisch kein Gegendruck mehr und die Schraubenfeder 18 drängt das Führungselement 30 und den Zylinderkolben 9 auseinander. Auf diese Weise wird der Einschiebevorgang der Kolbenstange 7 in den Druckzylinder 9 erleichtert.

Der gesamte Arbeitsgang kann wiederum insbesondere auf automatisierte Weise geschehen, indem die am Umfang des Druckzylinders 5 angeordneten Magnetschalter (nicht gezeigt) in Abhängigkeit von der Position des Zylinderkolbens 9 mit dem an diesem festgelegten Permanentmagneten 44 in Wechselwirkung treten und die Stellglieder 52, 54, 56 in der jeweils erläuterten Weise automatisch umschalten.

Die in Fig. 10 bis 16 gezeigte Vorrichtung weist gegenüber der Vorrichtung gemäß Fig. 4 bis 9 insbesondere den Vorteil auf, dass die Verlagerung der Kolbenstange 7 mit der Saugeinrichtung 3 gänzlich unabhängig von der Erzeugung eines an der Saugeinrichtung 3 anliegenden Unterdrucks geschieht und die Kolbenstange 7 unter Aufrechterhaltung eines an der Saugeinrichtung 3 anliegenden Unterdruckes beliebig teleskopierbar ist.

Während sowohl bei der Ausführungsform gemäß Fig. 4 bis 9 als auch bei der in Fig. 10 bis 16 wiedergegebenen Ausführungsform ein und derselbe Druckzylinder 5 sowohl zum Teleskopieren der Kolbenstange 7 mit der Saugeinrichtung 3 als auch zum Erzeugen von Unterdruck an der Saugeinrichtung 3 dient, können diese Funktionen selbstverständlich auch von zwei verschiedenen Kolben-Zylindereinheiten übernommen werden, z.B. einem in einem ersten Druckzylinder geführten Arbeitskolben zum Verlagern der Kolbenstange mit der Saugeinrichtung und einem zweiten, dem eigentlichen Druckzylinder mit dem vorbelasteten Zylinderkolben zur Erzeugung eines Unterdrucks an der Saugeinrichtung, welcher beispielsweise an dem Arbeitskolben des ersten Druckzylinders innerhalb desselben angeordnet ist und mit der Saugeinrichtung in Verbindung steht.

Ferner kann der mit der Saugeinrichtung korrespondierende Zylinderraum - abweichend von den dargestellten Ausführungsbeispielen - auch auf der der Saugeinrichtung abgewandten Seite des zur Erzeugung von Unterdruck vorgesehenen, vorbelasteten Zylinderkolbens angeordnet sein.

## Patentansprüche

1. Vorrichtung zum Umsetzen von Gegenständen (1), wie Werkstücken, Bauteilen oder dergleichen, mit wenigstens einer auf die Oberfläche (2) des Gegenstandes (1) aufsetzbaren, nach Art eines Saugnapfes wirkenden und mit Unterdruck beaufschlagbaren Saugeinrichtung (3), die mit zumindest einem Teil des Innenraums eines Druckzylinders (5) in Verbindung steht, in welchem wenigstens ein gegen die Zylinderinnenseite abgedichteter Zylinderkolben (9) in Längsrichtung des Druckzylinders (5) derart verschiebbar angeordnet ist, dass der mit der Saugeinrichtung (3) korrespondierende, auf der der Saugeinrichtung (3) zugewandten Seite des Zylinderkolbens (9) angeordnete zylinderraum vergrößerbar ist, um dort Unterdruck zu erzeugen, **dadurch gekennzeichnet, dass** der Zylinderkolben (9) in Richtung des der Saugeinrichtung (3) abgewandten Endes des Druckzylinders (5) vorbelastet und entgegen seiner Vorbelastungsrichtung mittels Fluiddruck verschiebbar ist.

2. Vorrichtung nach anspruch 1, **dadurch gekennzeichnet, dass** der Zylinderkolben (9) pneumatisch verschiebbar ist.

3. Vorrichtung nach Anspruch 1 oder 2, **dadurch gekennzeichnet, dass** der Zylinderkolben (9) zusätzlich zur Ver-schiebbarkeit mittels Fluiddruck magnetisch verschiebbar ist.

4. Vorrichtung nach Anspruch 3, **dadurch gekennzeichnet, dass** der Zylinderkolben (9) und/oder eine mit diesem verbundene Kolbenstange (7) einen Permanentmagneten (17a) trägt, welcher mit einem um den Umfang des Druckzylinders (5) angeordneten Elektromagneten (23), insbesondere einer Spule, zusammenwirkt.

5. Vorrichtung nach Anspruch 4, **dadurch gekennzeichnet, dass** der Zylinderkolben (9) und/oder eine mit diesem verbundene Kolbenstange (7) einen Elektromagneten, insbesondere eine Spule, trägt, welcher mit einem um den Umfang des Druckzylinders (5) angeordneten Permanentmagneten zusammenwirkt.

6. Vorrichtung nach einem der Ansprüche 1 bis 5, **dadurch gekennzeichnet, dass** der Zylinderkolben (9) elastisch vorbelastet ist.

7. Vorrichtung nach einem der Ansprüche 1 bis 6, **dadurch gekennzeichnet, dass** der Zylinderkolben (9) mittels wenigstens einer Schraubenfeder (18) elastisch vorbelastet ist.

8. Vorrichtung nach einem der Ansprüche 1 bis 7, **dadurch gekennzeichnet, dass** zwischen der Saugeinrichtung (3) und dem mit dieser korrespondierenden Innenraum des Druckzylinders (5) ein Luftfilter (16), insbesondere ein Vakuumfilter, angeordnet ist.

9. Vorrichtung nach einem der Ansprüche 1 bis 8, **dadurch gekennzeichnet, dass** die Saugeinrichtung (3) stationär an dem Druckzylinder (5), insbesondere an einem Zylinderdeckel (4), angeordnet ist.

10. Vorrichtung nach einem der Ansprüche 1 bis 9 **dadurch gekennzeichnet, dass** der Zylinderkolben (9) mittels einer an diesem festgelegten Kolbenstange (7) geführt ist.

11. Vorrichtung nach Anspruch 10, **dadurch gekennzeichnet, dass** die Kolbenstange (7) einen an dem der Saugeinrichtung (3) abgewandten Ende des Druckzylinders (5) angeordneten Zylinderboden (6) durchsetzt und an diesem im wesentlichen fluiddicht gelagert ist.

12. Vorrichtung nach Anspruch 11, **dadurch gekennzeichnet, dass** die Kolbenstange (7) an ihrem dem Zylinderkolben (9) abgewandten Ende einen Bund (17) aufweist, wobei die den Zylinderkolben (9) vorbelastende Schraubenfeder (18) zwischen dem Zylinderboden (6) und dem Bund (17) wirkt.

13. Vorrichtung nach Anspruch 12, **dadurch gekennzeichnet, dass** der Bund (17) in Längsrichtung der Kolbenstange (7) verlagerbar an der Kolbenstange (7) festgelegt ist.

14. Vorrichtung nach Anspruch 13 oder 14, **dadurch gekennzeichnet, dass** der Bund (17) in Form eines Permanent-(17a) oder Elektromagneten gebildet oder mit einem solchen ausgestattet ist.

15. Vorrichtung nach einem der Ansprüche 9 bis 14, **dadurch gekennzeichnet, dass** der zwischen dem Zylinderkolben (9) und dem Zylinderboden (6) angeordnete Zylinderraum einen Fluidanschluß (20) aufweist.

16. Vorrichtung nach einem der Ansprüche 12 bis 15, **dadurch gekennzeichnet, dass** der zwischen dem Zylinderkolben (9) und der Saugeinrichtung (3) angeordnete, mit dieser korrespondierende Zylinderraum einen Fluidanschluß aufweist.

17. Vorrichtung nach Anspruch 15 oder 16, **dadurch gekennzeichnet, dass** der mit dem zwischen dem Zylinderkolben (9) und dem Zylinderboden (6) angeordneten Zylinderraum korrespondierende Fluidanschluß (20) und/oder der mit dem zwischen dem Zylinderkolben (9) und der Saugeinrichtung (3) angeordneten Zylinderraum korrespondierende Fluidanschluß mit einem Stellglied (21), insbesondere einem Steuerventil, ausgestattet ist.

18. Vorrichtung nach einem der Ansprüche 1 bis 17, **dadurch gekennzeichnet, dass** die Saugeinrichtung (3) an der den Zylinderdeckel (4) durchsetzenden und am Zylinderdeckel (4) im wesentlichen fluiddicht gelagerten Kolbenstange (7) teleskopierbar angeordnet ist.

19. Vorrichtung nach Anspruch 18, **dadurch gekennzeichnet, dass** die Saugeinrichtung (3) über eine in der Kolbenstange (7) vorgesehene Durchgangsbohrung (28) mit dem Zylinderraum auf der der Saugeinrichtung (3) zugewandten Seite des Zylinderkolbens (9) korrespondiert.

20. Vorrichtung nach Anspruch 19, **dadurch gekennzeichnet, dass** die Durchgangsbohrung (28) in Längserstreckungsrichtung der Kolbenstange (7) angeordnet ist.

21. Vorrichtung nach einem der Ansprüche 18 bis 20, **dadurch gekennzeichnet, dass** die Kolbenstange (7) an ihrem der Saugeinrichtung (3) abgewandten Ende an einem Führungselement (30) gelagert ist, welches an seiner der Kolbenstange (7) bzw. der Saugeinrichtung (3) abgewandten Seite mit dem Zylinderkolben (9) in Verbindung steht und in Richtung von diesem weg vorbelastet ist.

22. Vorrichtung nach Anspruch 21, **dadurch gekennzeichnet, dass** die Schraubenfeder (18) zur elastischen Vorbelastung des Zylinderkolbens (9) zwischen dem Führungselement (30) und dem Zylinderkolben (9) wirkt.

23. Vorrichtung nach einem der Ansprüche 18 bis 22, **dadurch gekennzeichnet, dass** der auf der der Saugeinrichtung (3) abgewandten Seite des Zylinderkolbens (9) angeordnete Zylinderraum einen Fluidanschluß (39) aufweist.

24. Vorrichtung nach einem der Ansprüche 21 bis 23, **dadurch gekennzeichnet, dass** der auf der der Saugeinrichtung (3) zugewandten Seite des Zylinderkolbens (9) angeordnete Zylinderraum einen Fluidanschluß (42) aufweist.

25. Vorrichtung nach Anspruch 23 oder 24, **dadurch gekennzeichnet, dass** der Fluidanschluß (39) und/oder der Fluidanschluß (42) mit einem Stellglied (41, 54; 43, 52), insbesondere mit einem Steuerventil, ausgestattet ist/sind.

26. Vorrichtung nach einem der Ansprüche 23 bis 25, **dadurch gekennzeichnet, dass** der Fluidanschluß (39) und/oder der Fluidanschluß (42) mit einer Drosselstrecke, insbesondere einem Drosselrückschlagventil (40, 51), ausgestattet ist/sind.

27. Vorrichtung nach einem der Ansprüche 23 bis 26, **dadurch gekennzeichnet, dass** sowohl der auf der der Saugeinrichtung (3) abgewandten Seite des Zylinderkolbens (9) als auch der auf der der Saugeinrichtung (3) zugewandten Seite des Zylinderkolbens (9) angeordnete Zylinderraum je einen mit einem Stellglied (41, 54; 43, 52), insbesondere einem Steuerventil, ausgestatteten Fluidanschluß (39, 42) aufweist und die beiden Fluidanschlüsse (39, 42) über ein Stellglied (56), insbesondere ein Steuerventil, gemeinsam ansteuerbar sind.

28. Vorrichtung nach einem der Ansprüche 21 bis 27, **dadurch gekennzeichnet, dass** das Führungselement (30) in Richtung seiner in den Druckzylinder (5) eingeschobenen Stellung vorbelastet ist.

29. Vorrichtung nach Anspruch 28, **dadurch gekennzeichnet, dass** das Führungselement (30) elastisch vorbelastet ist.

30. Vorrichtung nach Anspruch 28 oder 29, **dadurch gekennzeichnet, dass** das Führungselement (30) mittels einer zwischen diesem und dem Zylinderdeckel (4) wirkenden Schraubenfeder (37) elastisch vorbelastet ist.

31. Vorrichtung nach Anspruch 30, **dadurch gekennzeichnet, dass** die Federkonstante der das Führungselement (30) vorbelastenden Schraubenfeder (37) geringer ist als die Federkonstante der den Zylinderkolben (9) vorbelastenden Schraubenfeder (18).

32. Vorrichtung nach einem der Ansprüche 21 bis 28, **dadurch gekennzeichnet, dass** das Führungselement (30) fluiddurchlässig ausgebildet ist.

33. Vorrichtung nach einem der Ansprüche 21 bis 28, **dadurch gekennzeichnet, dass** das Führungselement (30) im wesentlichen fluiddicht gegen die Innenseite des Druckzylinders (5) abgedichtet und der auf der der Saugeinrichtung zugewandten Seite des Zylinderkolbens (9) angeordnete Fluidanschluß (42) auf der dem Zylinderkolben (9) abgewandten Seite des Führungselementes (30) angeordnet ist.

34. Vorrichtung nach einem der Ansprüche 18 bis 33, **dadurch gekennzeichnet, dass** der Zylinderkolben (9) einen Magneten (44) trägt, welcher mit stationär an dem Druckzylinder (5) angeordneten Magnetsensoren zur Ermittlung der Position des Zylinderkolbens (9) und/oder Magnetschaltern zur automatischen Steuerung der Stellglieder (41, 43, 52, 54, 56) zusammenwirkt.

## Claims

1. Device for transferring objects (1), such as workpieces, components or the like, with at least one suction device (3) to be placed on the object (1), which acts in the manner of a suction cup and can be subjected to a vacuum and which is connected to at least part of the interior of a pressure cylinder (5), wherein at least one piston (9) sealed against the interior of the cylinder is movably located in such a way that the cylinder cavity communicating with the suction device (3) and located on that side of the piston (9) which faces the suction device (3) can be increased to generate a vacuum at this point, **characterised in that** the piston (9) is loaded towards that end of the pressure cylinder (5) which is remote from the suction device (5) and can be displaced by fluid pressure against its preload direction.

2. Device according to claim 1, **characterised in that** the piston (9) is displaced pneumatically.

3. Device according to claim 1 or 2, **characterised in that** the piston (9) can be displaced magnetically in addition to its displacement by fluid pressure.

4. Device according to claim 3, **characterised in that** the piston (9) and/or a piston rod (7) connected thereto support(s) a permanent magnet (17a) acting together with a solenoid (23), in particular a coil, placed around the circumference of the pressure cylinder (5).

5. Device according to claim 4, **characterised in that** the piston (9) and/or a piston rod (7) connected thereto support(s) a solenoid, in particular a coil, acting together with a permanent magnet placed around the circumference of the pressure cylinder (5).

6. Device according to any of claims 1 to 5, **characterised in that** the piston (9) is resiliently preloaded.

7. Device according to any of claims 1 to 6, **characterised in that** the piston (9) is resiliently preloaded by at least one coil spring (18).

8. Device according to any of claims 1 to 7, **characterised in that** an air filter (16), in particular a vacuum filter, is located between the suction device (3) and the interior of the pressure cylinder (5) corresponding therewith.

9. Device according to any of claims 1 to 8, **characterised in that** the suction device (3) is fixed to the pressure cylinder (5), in particular to a cylinder cover (4).

10. Device according to any of claims 1 to 9, **characterised in that** the piston (9) is guided by means of a piston rod (7) permanently attached thereto.

11. Device according to claim 10, **characterised in that** the piston rod (7) passes through a cylinder bottom (6) located at that end of the pressure cylinder (5) which is remote from the suction device (3) and is mounted therein in an essentially fluid-tight manner.

12. Device according to claim 11, **characterised in that** the piston rod (7) has a collar (17) at the end remote from the piston (9), the coil spring (18) preloading the piston (9) acting between the cylinder bottom (6) and the collar (17).

13. Device according to claim 12, **characterised in that** the collar (17) is located on the piston rod (7) for displacement in the longitudinal direction of the piston rod (17).

14. Device according to claim 13 or 14, **characterised in that** the collar (17) is designed as a permanent magnet (17a) or a solenoid or is fitted therewith.

15. Device according to any of claims 9 to 14, **characterised in that** the cylinder cavity between the piston (9) and the cylinder bottom (6) features a fluid port (20).

16. Device according to any of claims 12 to 15, **characterised in that** the cylinder cavity between the piston (9) and the suction device (3) corresponding with said cavity features a fluid port.

17. Device according to claim 15 or 16, **characterised in that** the fluid port (20) corresponding with the cylinder cavity between the piston (9) and the cylinder bottom (6) and/or the fluid port corresponding with the cylinder cavity between the piston (9) and the suction device (3) are/is fitted with a control element (21), in particular with a control valve.

18. Device according to any of claims 1 to 17, **characterised in that** the suction device (3) is telescopically located on the piston rod (7) passing through the cylinder cover (4) and mounted on the cylinder cover (4) in an essentially fluid-tight manner.

19. Device according to claim 18, **characterised in that** the suction device (3) corresponds with the cylinder cavity on that side of the piston (9) which faces the suction device (3) via a through-hole (28) provided in the piston rod.

20. Device according to claim 19, **characterised in that** the through-hole (28) extends in the longitudinal direction of the piston rod (7).

21. Device according to any of claims 18 to 20, **characterised in that** the end of the piston rod (7) which is remote from the suction device (3) is mounted on a guide element (30) connected on the side remote from the piston rod (7) or the suction device (3) to the piston (9) and preloaded away therefrom.

22. Device according to claim 21, **characterised in that** the coil spring (18) provided for resiliently preloading the piston (9) acts between the guide element (30) and the piston (9).

23. Device according to any of claims 18 to 22, **characterised in that** the cylinder cavity on that side of the piston (9) which is remote from the suction device (3) features a fluid port (39).

24. Device according to any of claims 21 to 23, **characterised in that** the cylinder cavity on that side of the piston (9) which faces the suction device (3) features a fluid port (42).

25. Device according to claim 23 or 24, **characterised in that** the fluid port (39) and/or the fluid port (42) are/is fitted with a control element (41, 54; 43, 52), in particular with a control valve.

26. Device according to any of claims 23 to 25, **characterised in that** the fluid port (39) and/or the fluid port (42) are/is fitted with a throttle section, in particular with a throttle return valve (40, 51).

27. Device according to any of claims 23 to 26, **characterised in that** both the cylinder cavity on that side of the piston (9) which is remote from the suction device (3) and the cylinder cavity on that side of the piston (9) which faces the suction device (3) feature fluid ports (39, 42) fitted with a control element (41, 54; 43, 52), in particular with a control valve, and **in that** the two fluid ports (39, 42) can be driven jointly by a control element (56), in particular by a control valve.

28. Device according to any of claims 21 to 27, **characterised in that** the guide element (30) is preloaded towards the position in which it is retracted into the pressure cylinder (5).

29. Device according to claim 28, **characterised in that** the guide element (30) is resiliently preloaded.

30. Device according to claim 28 or 29, **characterised in that** the guide element (30) is resiliently preloaded by a coil spring (37) acting between said guide element and the cylinder cover (4).

31. Device according to claim 30, **characterised in that** the spring rate of the coil spring (37) preloading the guide element (30) is lower than the spring rate of the coil spring (18) preloading the piston (9).

32. Device according to any of claims 21 to 28, **characterised in that** the guide element (30) is permeable to fluids.

33. Device according to any of claims 21 to 28, **characterised in that** the guide element (30) is essentially sealed fluid-tight against the interior of the pressure cylinder (5), and **in that** the fluid port (42) located on that side of the piston (9) which faces the suction device is located on that side of the guide element (30) which is remote from the piston (9).

34. Device according to any of claims 18 to 33, **characterised in that** the piston (9) supports a magnet (44) acting together with magnetic sensors located on the pressure cylinder (5) for detecting the position of the piston (9) and/or with solenoid switches for the automatic control of the control elements (41, 43, 52, 54, 56).

## Revendications

1. Dispositif destiné à déplacer des objets (1), tels que des pièces à usiner des composants ou similaires, comprenant au moins un dispositif d'aspiration (3) à poser sur la surface (2) de l'objet (1), agissant à la manière d'une ventouse et pouvant être mis sous dépression, qui communique avec au moins une partie de l'espace intérieur d'un vérin pneumatique (5), dans lequel est disposé au moins un piston de cylindre (9) étanche par rapport à l'intérieur du cylindre, de façon mobile dans la direction longitudinale du vérin pneumatique (5) de telle sorte que la chambre de cylindre en communication avec le dispositif d'aspiration (3), disposée du côté du piston de cylindre (9) tourné vers le dispositif d'aspiration (3), peut être agrandie afin d'y générer une dépression, **caractérisé en ce que** le piston de cylindre (9) est précontraint dans la direction de l'extrémité du vérin pneumatique (5), détournée du dispositif d'aspiration (3), et peut être déplacé contre sa direction de précontrainte au moyen d'une pression fluidique.

2. Dispositif selon la revendication 1, **caractérisé en ce que** le piston de cylindre (9) peut être déplacé de façon pneumatique.

3. Dispositif selon la revendication 1 ou 2, **caractérisé en ce que** le piston de cylindre (9), en plus de la possibilité d'être déplacé au moyen d'une pression fluidique, peut être déplacé de façon magnétique.

4. Dispositif selon la revendication 3, **caractérisé en ce que** le piston de cylindre (9) et/ou une tige de piston (7) reliée à celui-ci porte(nt) un aimant permanent (17a), en particulier d'une bobine, qui coopère avec un électroaimant (23) disposé sur la circonférence du vérin pneumatique (5).

5. Dispositif selon la revendication 4, **caractérisé en ce que** le piston de cylindre (9) et/ou une tige de piston (7) reliée à celui-ci porte(nt) un électroaimant, en particulier une bobine, qui coopère avec un aimant permanent disposé sur la circonférence du vérin pneumatique (5).

6. Dispositif selon l'une quelconque des revendications 1 à 5, **caractérisé en ce que** le piston de cylindre (9) est précontraint de façon élastique.

7. Dispositif selon l'une quelconque des revendications 1 à 6, **caractérisé en ce que** le piston de cylindre (9) est précontraint de façon élastique au moyen d'au moins un ressort cylindrique (18).

8. Dispositif selon l'une quelconque des revendications 1 à 7, **caractérisé en ce qu'**entre le dispositif d'aspiration (3) et l'espace intérieur du vérin pneumatique (5) en communication avec celui-ci est disposé un filtre à air (16), en particulier un filtre à vide.

9. Dispositif selon l'une quelconque des revendications 1 à 8, **caractérisé en ce que** le dispositif d'aspiration (3) est disposé de façon stationnaire sur le vérin pneumatique (5), en particulier au niveau d'un couvercle de cylindre (4).

10. Dispositif selon l'une quelconque des revendications 1 à 9, **caractérisé en ce que** le piston de cylindre (9) est guidé au moyen d'une tige de piston (7) fixée sur celui-ci.

11. Dispositif selon la revendication 10, **caractérisé en ce que** la tige de piston (7) traverse un fond de cylindre (6) disposé à l'extrémité du vérin pneumatique (5), détournée du dispositif d'aspiration (3), et est logée sur celui-ci de façon substantiellement étanche au fluide.

12. Dispositif selon la revendication 11, **caractérisé en ce que** la tige de piston (7) présente à son extrémité détournée du piston de cylindre (9) un épaulement (17), dans lequel le ressort cylindrique (18) précontraignant le piston de cylindre (9) agit entre le fond de cylindre (6) et l'épaulement (17).

13. Dispositif selon la revendication 12, **caractérisé en ce que** l'épaulement (17) est fixé dans la direction longitudinale de la tige de piston (7) de façon à pouvoir être décalé sur la tige de piston (7).

14. Dispositif selon la revendication 13 ou 14, **caractérisé en ce que** l'épaulement (17) est formé sous la forme d'un aimant permanent (17a) ou d'un électroaimant ou est équipé d'un tel aimant.

15. Dispositif selon l'une quelconque des revendications 9 à 14, **caractérisé en ce que** la chambre de cylindre disposée entre le piston de cylindre (9) et le fond de cylindre (6) présente un raccordement de fluide (20).

16. Dispositif selon l'une quelconque des revendications 12 à 15, **caractérisé en ce que** la chambre de cylindre disposée entre le piston de cylindre (9) et le dispositif d'aspiration (3) et en communication avec celui -ci présente un raccordement de fluide.

17. Dispositif selon la revendication 15 ou 16, **caractérisé en ce que** le raccordement de fluide (20) en communication avec la chambre de cylindre disposée entre le piston de cylindre (9) et le fond de cylindre (6) et/ou le raccordement de fluide en communication avec la chambre de cylindre disposée entre le piston de cylindre (9) et le dispositif d'aspiration (3) est/sont muni(s) d'un actionneur (21), en particulier d'une vanne-pilote.

18. Dispositif selon l'une quelconque des revendications 1 à 17, **caractérisé en ce que** le dispositif d'aspiration (3) est disposé de façon télescopique au niveau de la tige de piston (7) traversant le couvercle de cylindre (4) et logée sur le couvercle de cylindre (4) de façon substantiellement étanche au fluide.

19. Dispositif selon la revendication 18, **caractérisé en ce que** le dispositif d'aspiration (3), par l'intermédiaire d'un alésage traversant (28) prévu dans la tige de piston (7), est en communication avec la chambre de cylindre du côté du piston de cylindre (9) tourné vers le dispositif d'aspiration (3).

20. Dispositif selon la revendication 19, **caractérisé en ce que** l'alésage traversant (28) est disposé dans la direction d'étendue longitudinale de la tige de piston (7).

21. Dispositif selon l'une quelconque des revendications 18 à 20, **caractérisé en ce que** la tige de piston (7) est logée à son extrémité détournée du dispositif d'aspiration (3) au niveau d'un élément de guidage (30) qui communique avec le piston de cylindre (9) sur son côté détourné de la tige de piston (7) ou du dispositif d'aspiration (3) et est précontrainte dans la direction s'éloignant de celui-ci.

22. Dispositif selon la revendication 21, **caractérisé en ce que** le ressort cylindrique (18) pour la précontrainte élastique du piston de cylindre (9) agit entre l'élément de guidage (30) et le piston de cylindre (9).

23. Dispositif selon l'une quelconque des revendications 18 à 22, **caractérisé en ce que** la chambre de cylindre disposée du côté du piston de cylindre (9), détourné du dispositif d'aspiration (3), présente un raccordement de fluide (39).

24. Dispositif selon l'une quelconque des revendications 21 à 23, **caractérisé en ce que** la chambre de cylindre disposée du côté du piston de cylindre (9), tourné vers le dispositif d'aspiration (3), présente un raccordement de fluide (42).

25. Dispositif selon la revendication 23 ou 24, **caractérisé en ce que** le raccordement de fluide (39) et/ou le raccordement de fluide (42) est/sont muni(s) d'un actionneur (41, 54 ; 43, 52), en particulier d'une vanne-pilote.

26. Dispositif selon l'une quelconque des revendications 23 à 25, **caractérisé en ce que** le raccordement de fluide (39) et/ou le raccordement de fluide (42) est/sont muni(s) d'un trajet d'étranglement, en particulier d'un clapet antiretour avec étranglement (40, 51).

27. Dispositif selon l'une quelconque des revendications 23 à 26, **caractérisé en ce qu'**à la fois la chambre de cylindre disposée du côté du piston de cylindre (9), détourné du dispositif d'aspiration (3), et la chambre de cylindre disposée du côté du piston de cylindre (9), tourné vers le dispositif d'aspiration (3), présentent respectivement un raccordement de fluide (39, 42) muni d'un actionneur (41, 54 ; 43, 52), en particulier d'une vanne-pilote, et **en ce que** les deux raccordements de fluide peuvent être pilotés ensemble par l'intermédiaire d'un actionneur (56), en particulier d'une vanne-pilote.

28. Dispositif selon l'une quelconque des revendications 21 à 27, **caractérisé en ce que** l'élément de guidage (30) peut être précontraint dans la direction de sa position rentrée dans le vérin pneumatique (5).

29. Dispositif selon la revendication 28, **caractérisé en ce que** l'élément de guidage (30) est précontraint de façon élastique.

30. Dispositif selon la revendication 28 ou 29, **caractérisé en ce que** l'élément de guidage (30) est précontraint de façon élastique au moyen d'un ressort cylindrique (37) agissant entre celui-ci et le couvercle de cylindre (4).

31. Dispositif selon la revendication 30, **caractérisé en ce que** la constante de rappel du ressort cylindrique (37) précontraignant l'élément de guidage (30) est inférieure à la constante de rappel du ressort cylindrique (18) précontraignant le piston de cylindre (9).

32. Dispositif selon l'une quelconque des revendications 21 à 28, **caractérisé en ce que** l'élément de guidage (30) est réalisé de façon perméable au fluide.

33. Dispositif selon l'une quelconque des revendications 21 à 28, **caractérisé en ce que** l'élément de guidage (30) est rendu étanche de façon substantiellement étanche au fluide par rapport à l'intérieur du vérin pneumatique (5) et **en ce que** le raccordement de fluide (42) disposé du côté du piston de cylindre (9), tourné vers le dispositif d'aspiration, est disposé du côté de l'élément de guidage (30), détourné du piston de cylindre (9).

34. Dispositif selon l'une quelconque des revendications 18 à 33, **caractérisé en ce que** le piston de cylindre (9) porte un aimant (44) qui coopère avec des capteurs magnétiques disposés de façon stationnaire sur le vérin pneumatique (5) pour déterminer la position du piston de cylindre (9) et/ou avec des commutateurs magnétiques pour une commande automatique des actionneurs (41, 43, 52, 54, 56).
